(19) Europäisches Patentamt
European Patent Office
Office européen des brevets

(11) **EP 3 850 394 B1**

(12) **FASCICULE DE BREVET EUROPEEN**

(45) Date de publication et mention de la délivrance du brevet:
**30.11.2022 Bulletin 2022/48**

(21) Numéro de dépôt: **19765508.7**

(22) Date de dépôt: **12.09.2019**

(51) Classification Internationale des Brevets (IPC):
**G01S 7/62** *(2006.01)*

(52) Classification Coopérative des Brevets (CPC):
**G01S 7/5273; G01S 7/52004; G01S 7/6245; G01S 15/42; G01S 15/8902**

(86) Numéro de dépôt international:
**PCT/EP2019/074357**

(87) Numéro de publication internationale:
**WO 2020/053335 (19.03.2020 Gazette 2020/12)**

(54) **PROCÉDÉ DE DÉTERMINATION D'UNE PROFONDEUR, OU D'UN PROFIL BATHYMÉTRIQUE, SUR LA BASE D'UN PROFIL DE CÉLÉRITÉ MOYENNE DU SON, PROCÉDÉ DE DÉTERMINATION D'UN TEL PROFIL DE CÉLÉRITÉ, ET SYSTÈME SONAR ASSOCIÉ**

VERFAHREN ZUR BESTIMMUNG EINER TIEFE ODER EINES BATHYMETRISCHEN PROFILS AUF BASIS EINES MITTLEREN SCHALLGESCHWINDIGKEITSPROFILS, VERFAHREN ZUR BESTIMMUNG SOLCH EINES GESCHWINDIGKEITSPROFILS UND ZUGEHÖRIGES SONARSYSTEM

METHOD FOR DETERMINING A DEPTH OR A BATHYMETRIC PROFILE BASED ON AN AVERAGE SOUND SPEED PROFILE, METHOD FOR DETERMINING SUCH A SPEED PROFILE, AND RELATED SONAR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2018 FR 1858281**

(43) Date de publication de la demande:
**21.07.2021 Bulletin 2021/29**

(73) Titulaire: **Ixblue**
**78100 Saint-Germain-en-Laye (FR)**

(72) Inventeur: **CHARLOT, Didier**
**78100 Saint-Germain-en-Laye (FR)**

(74) Mandataire: **Jacobacci Coralis Harle**
**32, rue de l'Arcade**
**75008 Paris (FR)**

(56) Documents cités:
**WO-A1-01/42812      FR-A1- 3 043 788**
**US-B1- 6 577 557**

• **None: "CHAPITRE 3 DETERMINATION DE LA PROFONDEUR" In: "Manuel d'Hydrographie", 1 février 2011 (2011-02-01), XP055599127, pages 113-182, cité dans la demande page 121,, alinéa page 161, alinéa 5.2.1.8.1163 - page 163, ligne 14**

**Description**

DOMAINE TECHNIQUE AUQUEL SE RAPPORTE L'INVENTION

La présente invention concerne de manière générale la détermination d'une différence de profondeur, ou la détermination d'un écart latéral par rapport à la verticale entre deux points d'un milieu subaquatique, par mesure d'un temps de propagation et/ou d'une constante de propagation d'une onde acoustique se propageant entre ces deux points, sur la base d'une célérité moyenne dans ce milieu subaquatique.

Elle s'applique en particulier à la mesure de la topographie d'un fond marin, et à la localisation d'un objet ou d'un banc de poissons immergé. Elle s'applique également à la détermination de ladite célérité moyenne, à partir des mesures topographiques elles-mêmes.

ARRIERE-PLAN TECHNOLOGIQUE

De plus en plus de navires sont équipés aujourd'hui de sonars, qu'il s'agisse de drones ou de navires destinés à accueillir un équipage, de surface ou submersibles. En particulier, de plus en plus de drones de type « AUV » ou « USV » (selon des acronymes anglo-saxons de « Autonomous Underwater Vehicule », c'est-à-dire « navire autonome sous-marin », et de « Unmanned Surface Vehicle », c'est-à-dire navire de surface sans équipage) sont aujourd'hui équipés de sonars. De tels sonars permettent notamment de déterminer un profil bathymétrique du fond marin situé sous le navire (un tel profil rassemblant, pour plusieurs points du fond marin, des données de profondeurs et de positions horizontales repérant ces points du fond), ou de localiser un objet ou un banc de poissons situé dans une colonne d'eau s'étendant sous ce navire.

Pour déterminer la profondeur d'un point du fond marin situé à l'aplomb du sonar, le sonar émet une onde acoustique vers ce point. Après réflexion sur le fond, cette onde acoustique est reçue par un ou plusieurs récepteurs équipant le sonar. La durée séparant les instants d'émission et de réception de l'onde acoustique, qui est égale au temps nécessaire pour que l'onde acoustique effectue un trajet aller et un trajet retour entre le sonar et le fond marin, permet alors de déterminer la profondeur à laquelle est située ce point du fond marin. Pour cela, la moitié de cette durée est multipliée par une valeur donnée d'une célérité des ondes acoustiques dans le milieu.

Mais une telle détermination de profondeur est souvent imprécise car la célérité des ondes acoustiques dans un milieu subaquatique varie généralement en fonction de la profondeur (du fait notamment de variations de température, de densité ou de salinité avec la profondeur).

Le « *Manuel d'hydrographie* » de l'Organisation Hydrographique Internationale (publication C-13, 1ère édition, mise à jour de février 2011, disponible sur le site internet https://www.iho.int/iho_pubs/CB/C13_Index.htm#C-13F), propose alors, pour déterminer la profondeur d'un point du fond situé à l'aplomb du sonar :

- préalablement aux mesures de temps d'échos mentionnées ci-dessus, de relever un profil de célérité, c'est-à-dire un ensemble de valeurs de célérité présentées localement, en différents points situés plus ou moins profondément sous la surface de l'eau, par des ondes acoustiques, puis
- d'employer une célérité effective, égale à la moyenne harmonique, le long de la colonne d'eau considérée, des valeurs de célérité précédemment relevées (paragraphe 2.2.4 du chapitre 3 de ce document).

Puisqu'il s'agit d'une moyenne harmonique, l'inverse de cette célérité effective est égal à la moyenne arithmétique des inverses desdites valeurs locales de célérité du son.

Pour un point du fond qui n'est pas situé à l'aplomb du sonar, l'onde acoustique est déviée par réfraction, tout au long de son trajet entre le sonar et le point sondé (du fait de la variation de la célérité des ondes acoustiques avec la profondeur). C'est le temps de propagation de l'onde, le long de ce trajet non-rectiligne, qui est alors mesuré par le sonar.

Pour déterminer la profondeur d'un tel point, et son écart latéral par rapport au sonar (écart par rapport à la verticale), le document précité indique (en page 121) qu'il est nécessaire de tracer le trajet suivi point par point par les rayons acoustiques, déviés sous l'effet de la réfraction mentionnée plus haut. Ce document propose plus précisément (en page 161) de modéliser le milieu subaquatique comme un empilement de plusieurs couches, la célérité des ondes acoustiques ou son gradient étant supposés constants dans chaque couche. Le trajet des rayons acoustiques est alors déterminé de proche en proche, couche par couche. Cela permet alors de relier le temps de propagation le long de ce trajet, à la profondeur du point sondé et à son écart latéral par rapport au sonar.

Cependant, le trajet suivi par les rayons acoustiques doit être déterminé à nouveau, entièrement, à chaque changement de la direction de l'onde acoustique reçue par le sonar.

La mise en œuvre de cette méthode implique donc de nombreux calculs, et nécessite des ressources informatiques importantes, en particulier lors de l'utilisation de sonars multifaisceaux (qui génèrent simultanément une multitude d'ondes acoustiques d'inclinaisons différentes). Cette méthode nécessite en outre une mesure préalable du profil de célérité des ondes acoustiques sur toute la gamme de profondeurs allant du sonar jusqu'au point sondé.

Le document WO 01/42812 A1 décrit une méthode mettant en œuvre plusieurs trajectoires de déplacement d'un navire, ces trajectoires ayant des points de superposition, pour mesurer les différences de profondeur obtenue avec les différentes trajectoires et déterminer un modèle muticouche de temps de propagation. Le document US 6,577,557 B1 décrit un système et un procédé de détermination d'un profil de célérité d'une impulsion acoustique dans une colonne d'eau.

OBJET DE L'INVENTION

Dans ce contexte, la présente invention propose un procédé de détermination d'une différence de profondeur, ou d'un écart latéral par rapport à la verticale entre deux points d'un milieu subaquatique, basé sur un modèle monocouche bien choisi du milieu subaquatique, au lieu d'être basé sur un modèle multicouche tel que décrit dans l'art antérieur précité (« *Manuel d'hydrographie* » de l'Organisation Hydrographique Internationale). Dans ce modèle monocouche, il est supposé que l'onde acoustique se propage en ligne droite dans le milieu, selon une direction de propagation effective (différente de sa direction de réception), et avec une célérité moyenne qui est indépendante de cette direction de propagation effective. L'emploi de ce modèle monocouche simplifie considérablement les calculs nécessaires à une telle détermination, tout en conduisant à des résultats d'une grande précision.

L'invention prévoit en particulier un procédé comprenant les étapes suivantes :

- émission d'une onde acoustique dans le milieu subaquatique au moyen d'au moins un émetteur,
- réception de ladite onde acoustique au moyen d'une antenne réceptrice comprenant plusieurs récepteurs, ces récepteurs délivrant une pluralité respective de signaux de réception lors de la réception de ladite onde acoustique,
- détermination d'une constante de propagation de l'onde acoustique reçue, en fonction desdits signaux de réception, ladite constante de propagation étant égale au sinus d'un angle de réception repérant la direction de réception de l'onde acoustique par rapport à la verticale, divisé par une vitesse de propagation locale des ondes acoustiques à la profondeur de ladite antenne réceptrice,
- détermination d'un temps de propagation de l'onde acoustique, en fonction d'une durée séparant les instants d'émission et de réception de l'onde acoustique,
- détermination de la différence de profondeur ou de l'écart latéral par rapport à la verticale, entre l'antenne réceptrice et l'émetteur, ou entre l'antenne réceptrice et un élément immergé réfléchissant ladite onde acoustique lors de sa propagation de l'émetteur jusqu'à l'antenne réceptrice, en fonction :
  - d'un produit dudit temps de propagation par une valeur de célérité moyenne de l'onde acoustique à une profondeur de l'émetteur ou à une profondeur de l'élément immergé, ladite valeur de célérité moyenne étant représentative d'une moyenne harmonique d'une pluralité de vitesses de propagation locales, présentées par les ondes acoustiques à une pluralité respective de profondeurs allant de la profondeur de l'émetteur jusqu'à une profondeur de l'antenne réceptrice, ou de la profondeur dudit élément immergé jusqu'à la profondeur de l'antenne réceptrice, et en fonction
  - d'un angle de propagation moyen, défini entre la verticale et la direction de propagation effective de l'onde acoustique, l'angle de propagation moyen étant déterminé en fonction de ladite constante de propagation et de ladite valeur de célérité moyenne de l'onde acoustique à la profondeur de l'émetteur ou à la profondeur de l'élément immergé.

Le déposant a constaté que pour une valeur appropriée de ladite célérité moyenne, la différence de profondeur, ou l'écart latéral déterminés comme indiqué ci-dessus sont, de manière surprenante, suffisamment précis au regard des normes hydrographiques internationales généralement recommandées (en particulier au regard des ordres de précision « 1b » et « spécial » tels que définis par les « Normes de l'O.H.I pour les levés hydrographiques », Monaco, 5ème édition, ordres de précision repris en pages 8 à 10 du « *Manuel d'hydrographie* » de l'Organisation Hydrographique Internationale mentionné plus haut).

Dans ce procédé, l'influence de la réfraction subie par l'onde acoustique est donc prise en compte précisément, sans pour autant qu'il soit nécessaire de déterminer le détail du trajet suivi par l'onde acoustique. Cela permet d'exécuter le procédé de manière avantageusement rapide et/ou avec des ressources de calcul limitées.

Il s'avère en outre, comme déjà indiqué, que la valeur appropriée de la célérité moyenne en question (pour laquelle on obtient une détermination précise de la différence de profondeur et/ou de l'écart latéral entre les points considérés) est *indépendante* de l'inclinaison de l'onde acoustique reçue. Ainsi, à partir du moment où cette valeur appropriée est connue (ou déterminée), plusieurs mesures de différences de profondeur, réalisées pourtant pour des inclinaisons différentes, peuvent être obtenues au moyen d'une même formule numérique, ce qui réduit notablement le temps de calcul nécessaire pour déterminer ces différences de profondeur.

On note par ailleurs que la différence de profondeur et/ou l'écart latéral mentionnés ci-dessus peuvent être déterminés en se basant sur une seule valeur de célérité, au lieu d'avoir à se baser sur de nombreuses célérités différentes mesurées préalablement pour toute la gamme de profondeurs allant de l'antenne réceptrice jusqu'à l'émetteur, ou de l'antenne réceptrice jusqu'audit élément immergé.

D'autres caractéristiques non limitatives et avantageuses du procédé de détermination conforme à l'invention, prises individuellement ou selon toutes les combinaisons techniquement possibles, sont les suivantes :

- ladite valeur de célérité moyenne est déterminée à partir d'un profil de célérité moyenne, le profil de célérité moyenne étant déterminé par intégration numérique d'un profil de vitesse de propagation locale relevé précédemment entre la profondeur de l'émetteur et la profondeur de l'antenne réceptrice, ou entre la profondeur dudit élément immergé et la profondeur de l'antenne réceptrice ;
- il est prévu un déplacement de l'antenne réceptrice parallèlement à son axe longitudinal d'une première position à une deuxième position, et comprenant la détermination d'un premier temps de propagation d'une première onde acoustique pour la première position et d'une première constante de propagation de l'onde acoustique reçue et, respectivement, d'un deuxième temps de propagation d'une deuxième onde acoustique pour la deuxième position et d'une deuxième constante de propagation et dans lequel ladite valeur de célérité moyenne est déterminée en fonction du premier temps de propagation, du deuxième temps de propagation et de la deuxième constante de propagation ;
- il est prévu la détermination d'un profil de célérité moyenne pour une pluralité de profondeurs comprises entre la profondeur de l'émetteur et la profondeur de l'antenne réceptrice, ou entre la profondeur dudit élément immergé et la profondeur de l'antenne réceptrice, et estimation d'un profil de vitesse de propagation locale par une méthode numérique d'inversion à partir du profil de célérité moyenne ;

- il est prévu de déterminer à la fois ladite différence de profondeur et ledit écart latéral par rapport à la verticale ;
- ladite différence de profondeur est déterminée, de manière à présenter un écart relatif inférieur à un pour mille par rapport :

  - au produit dudit temps de propagation par ladite valeur de célérité moyenne,
  - multiplié par le cosinus dudit angle de propagation moyen ;

- ledit écart latéral est déterminé, de manière à présenter un écart relatif inférieur à un pour mille par rapport :

  - au produit dudit temps de propagation par ladite valeur de célérité moyenne,
  - multiplié par le sinus dudit angle de propagation moyen ;

- ladite célérité moyenne est représentative d'une moyenne harmonique d'une pluralité de vitesses de propagation locales, présentées par les ondes acoustiques à une pluralité respective de profondeurs allant d'une profondeur de l'émetteur jusqu'à une profondeur de l'antenne réceptrice, ou d'une profondeur dudit élément immergé jusqu'à la profondeur de l'antenne réceptrice ;
- l'angle de propagation moyen est déterminé de sorte que son sinus présente un écart relatif inférieur à un pour mille par rapport au produit de ladite constante de propagation par ladite valeur de célérité moyenne ;
- l'angle de propagation moyen est déterminé en fonction en outre d'une célérité arithmétique moyenne qui est représentative d'une moyenne arithmétique d'une pluralité de vitesses de propagation locales, présentées par les ondes acoustiques à une pluralité respective de profondeurs allant de la profondeur l'émetteur jusqu'à la profondeur de l'antenne réceptrice, ou de la profondeur dudit élément immergé jusqu'à la profondeur de l'antenne réceptrice ;
- l'angle de propagation moyen est déterminé de sorte que son sinus présente un écart relatif inférieur à un point mille par rapport à ladite constante de propagation, multipliée par ladite célérité arithmétique moyenne ;
- l'émetteur et l'antenne réceptrice équipent un même système sonar, et, au cours du procédé, ce système sonar détermine la différence de profondeurs ou l'écart latéral par rapport à la verticale entre l'antenne réceptrice et un élément immergé réfléchissant ladite onde acoustique lors de sa propagation depuis l'émetteur jusqu'à l'antenne réceptrice ;
- ledit émetteur fait partie d'une antenne émettrice directive dudit système sonar, cette antenne émettrice émettant ladite onde acoustique et comprenant au moins un autre émetteur ;
- l'émetteur et l'antenne réceptrice équipent respectivement deux systèmes distincts situés à des profondeurs respectives différentes, et, au cours du procédé, le système muni de l'antenne réceptrice détermine la différence de profondeurs ou l'écart latéral par rapport à la verticale entre l'antenne réceptrice et ledit émetteur ;
- ladite antenne réceptrice comprend au moins trois récepteurs non alignés, ou, le système comprenant ladite antenne réceptrice comprend au moins une autre antenne réceptrice, une direction de réception de ladite onde acoustique étant repérée de manière tridimensionnelle sur la base des signaux de réception délivrés par l'ensemble des deux antennes réceptrices ;
- l'émetteur équipe une balise immergée ;

- l'antenne réceptrice équipe un système sonar ;
- le procédé comprend en outre les étapes suivantes :

    - détermination, au moyen d'une sonde positionnée successivement à plusieurs profondeurs différentes, d'une pluralité de vitesses de propagation locales présentées respectivement, à chacune desdites profondeurs, par les ondes acoustiques, puis
    - détermination du profil de vitesse de propagation locale en fonction de ladite pluralité de vitesses de propagation locales déterminées précédemment ;

- le procédé comprend en outre les étapes suivantes :

    - après l'émission et la réception de ladite onde acoustique, déplacement du système sonar, puis
    - émission d'une autre onde acoustique dans le milieu subaquatique au moyen dudit émetteur, de sorte que ladite autre onde atteigne ledit élément immergé,
    - après réflexion sur ledit élément immergé, réception de ladite autre onde acoustique au moyen de l'antenne réceptrice,
    - détermination d'une autre constante de propagation, pour ladite autre onde acoustique reçue, en fonction des signaux de réception délivrés par les récepteurs de l'antenne réceptrice suite à la réception de cette autre onde acoustique, ladite autre constante de propagation étant égale au sinus d'un autre angle de réception repérant la direction de réception de ladite autre onde acoustique par rapport à la verticale, divisé par une vitesse de propagation locale des ondes acoustiques à la profondeur de ladite antenne réceptrice,
    - détermination d'un autre temps de propagation, en fonction d'une autre durée séparant les instants d'émission et de réception de ladite autre onde acoustique, et
    - détermination de ladite célérité moyenne en fonction :

        - du temps de propagation et de la constante de propagation de ladite onde acoustique, et
        - du temps de propagation et de la constante de propagation de ladite autre onde acoustique ;

- ladite valeur de célérité moyenne est déterminée de manière à ce qu'un écart entre :

    - ladite différence de profondeur, et
    - une deuxième différence de profondeur entre l'antenne réceptrice et l'élément immergé
      soit inférieur à un seuil donné, ladite deuxième différence de profondeur étant déterminée en fonction :

        - d'un produit dudit deuxième temps de propagation par ladite valeur de célérité moyenne, et en fonction
        - d'un autre angle de propagation moyen, défini entre la verticale et une direction de propagation effective de ladite autre onde acoustique, ledit autre angle de propagation moyen étant déterminé en fonction de ladite autre constante de propagation.

L'invention concerne aussi un procédé de détermination d'une vitesse de propagation locale des ondes acoustiques dans un milieu subaquatique, comprenant les étapes suivantes :

- pour une pluralité d'éléments immergés situés à des profondeurs différentes, détermination d'une pluralité respective de valeurs de célérité moyenne, chacune desdites valeurs étant déterminée conformément au procédé décrit ci-dessus, puis
- détermination d'une pluralité de vitesses de propagation locales des ondes acoustiques, pour une pluralité de profondeurs données dans l'intervalle de profondeur de la pluralité des éléments immergés et en particulier pour chaque profondeur de chaque élément immergé de ladite pluralité d'éléments immergés, en fonction de ladite pluralité de valeurs de célérité moyenne déterminées précédemment, et
- détermination en chacun desdits éléments immergés, à partir de la pluralité de vitesses de propagation locales déterminée précédemment et des constantes de propagations associées, des angles d'incidence respectifs de l'onde acoustique.

L'invention concerne aussi un procédé de détermination d'une position d'un émetteur immergé dans un milieu subaquatique, comprenant les étapes suivantes :

- émission d'une onde acoustique dans le milieu subaquatique par ledit émetteur, dont la profondeur est connue,
- réception de ladite onde acoustique au moyen d'une antenne réceptrice équipant un navire, de surface ou submersible, l'antenne réceptrice comprenant plusieurs récepteurs délivrant une pluralité respective de signaux de réception,

- détermination d'une constante de propagation de l'onde acoustique reçue, en fonction desdits signaux de réception, ladite constante de propagation étant égale au sinus d'un angle de réception repérant la direction de réception de l'onde acoustique par rapport à la verticale dans le plan vertical contenant l'émetteur et l'antenne réceptrice, divisé par une vitesse de propagation locale des ondes acoustiques à la profondeur de ladite antenne réceptrice,
- détermination d'une direction de propagation effective de l'onde acoustique en fonction du produit de ladite constante de propagation et d'une valeur de célérité moyenne de propagation à la profondeur de l'émetteur immergé, ladite valeur de célérité moyenne étant représentative d'une moyenne harmonique d'une pluralité de vitesses de propagation locales, présentées par les ondes acoustiques à une pluralité respective de profondeurs entre la profondeur de l'émetteur et la profondeur de l'antenne réceptrice, et
- détermination d'un écart latéral par rapport à la verticale entre l'antenne réceptrice et l'émetteur, en fonction du produit de :

  - la différence entre la profondeur de l'émetteur et la profondeur de l'antenne réceptrice, et de
  - la tangente d'un angle de propagation moyen défini entre ladite direction de propagation effective et la verticale, l'angle de propagation moyen étant déterminé en fonction de ladite constante de propagation et de ladite valeur de célérité moyenne de l'onde acoustique à la profondeur de l'émetteur.

L'émetteur peut en particulier équiper une balise immergée, tandis que l'antenne réceptrice équipe un système sonar.

L'invention concerne également un système sonar comprenant :

- une antenne réceptrice configurée pour réceptionner une onde acoustique qui a été émise précédemment dans un milieu subaquatique par au moins un émetteur, l'antenne réceptrice comprenant plusieurs récepteurs aptes à délivrer une pluralité respective de signaux de réception lors de la réception de ladite onde acoustique, et
- une unité de traitement électronique programmée pour :

  - déterminer une constante de propagation de l'onde acoustique reçue, en fonction desdits signaux de réception, ladite constante de propagation étant égale au sinus d'un angle de réception repérant la direction de réception de l'onde acoustique par rapport à la verticale, divisé par une vitesse de propagation locale des ondes acoustiques à la profondeur de ladite antenne réceptrice,
  - déterminer un temps de propagation de l'onde acoustique, en fonction d'une durée séparant les instants d'émission et de réception de l'onde acoustique, et pour

  - déterminer une différence de profondeur ou un écart latéral par rapport à la verticale, entre l'antenne réceptrice et l'émetteur ou entre l'antenne réceptrice et un élément immergé réfléchissant ladite onde acoustique lors de sa propagation depuis l'émetteur jusqu'à l'antenne réceptrice, en fonction :

    - d'un produit dudit temps de propagation par une valeur de célérité moyenne de l'onde acoustique, ladite valeur de célérité moyenne étant représentative d'une moyenne harmonique d'une pluralité de vitesses de propagation locales, présentées par les ondes acoustiques à une pluralité respective de profondeurs allant de la profondeur de l'émetteur jusqu'à une profondeur de l'antenne réceptrice, ou de la profondeur dudit élément immergé jusqu'à la profondeur de l'antenne réceptrice, et en fonction
    - d'un angle de propagation moyen, défini entre la verticale et une direction de propagation effective de l'onde acoustique, l'angle de propagation moyen étant déterminé en fonction de ladite constante de propagation et de ladite valeur de célérité moyenne de l'onde acoustique à la profondeur de l'émetteur ou à la profondeur de l'élément immergé.

Le système sonar peut comprendre aussi ledit émetteur, ou comprendre une antenne émettrice qui comprend ledit émetteur au nombre de un au moins.

Les différentes caractéristiques optionnelles présentées plus haut en termes de procédé peuvent aussi s'appliquer au système sonar qui vient d'être décrit.

L'invention concerne aussi un système sonar comprenant :

- une antenne réceptrice configurée pour réceptionner une onde acoustique qui a été émise précédemment dans un milieu subaquatique par un émetteur dont on connait la profondeur, l'antenne réceptrice comprenant plusieurs récepteurs aptes à délivrer une pluralité respective de signaux de réception lors de la réception de ladite onde acoustique, et

- une unité de traitement électronique programmée pour :

    - déterminer une constante de propagation de l'onde acoustique reçue, en fonction desdits signaux de réception, ladite constante de propagation étant égale au sinus d'un angle de réception repérant la direction de réception de l'onde acoustique par rapport à la verticale, divisé par une vitesse de propagation locale des ondes acoustiques à la profondeur de ladite antenne réceptrice,
    - déterminer une direction de propagation effective de l'onde acoustique reçue, en fonction du produit de ladite constante de propagation et d'une valeur de célérité moyenne de propagation à la profondeur de l'émetteur et la profondeur de l'antenne réceptrice, ladite valeur de célérité moyenne étant représentative d'une moyenne harmonique d'une pluralité de vitesses de propagation locales, présentées par les ondes acoustiques à une pluralité respective de profondeurs allant de la profondeur de l'émetteur jusqu'à une profondeur de l'antenne réceptrice,

- acquérir ou lire dans une mémoire une donnée représentative de la profondeur de l'émetteur, et pour
- déterminer l'écart latéral par rapport à la verticale, entre l'antenne réceptrice et l'émetteur, en fonction du produit de :

    - la différence entre la profondeur de l'émetteur et la profondeur de l'antenne réceptrice, et de
    - la tangente d'un angle de propagation moyen défini entre ladite direction de propagation effective et la verticale, l'angle de propagation moyen étant déterminé en fonction de ladite constante de propagation et de ladite valeur de célérité moyenne de l'onde acoustique à la profondeur de l'émetteur.

L'invention concerne également un navire, autonome ou destiné à accueillir un équipage, de surface ou submersible, muni d'un système sonar tel que décrit ci-dessus.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement vu de côté, un navire muni d'un système sonar selon l'invention,
- la figure 2 représente schématiquement le navire de la figure 1, vu de dessous,
- la figure 3 représente schématiquement un faisceau d'ondes acoustiques émis par le système sonar de la figure 1 au cours d'un premier procédé permettant de relever la topographie d'un fond marin,
- la figure 4 représente schématiquement, plus en détail, des récepteurs du système sonar de la figure 1,
- la figure 5 représente schématiquement le trajet suivi par une onde acoustique reçue par les récepteurs du système sonar de la figure 1,
- la figure 6 représente schématiquement les principales étapes du premier procédé mentionné ci-dessus,
- les figures 7A et 7B représentent schématiquement l'évolution d'une vitesse de propagation locale des ondes acoustiques dans le milieu subaquatique considéré, et l'évolution d'une célérité moyenne de ces ondes en fonction de la profondeur dans ce milieu,
- la figure 8 représente schématiquement une erreur de détermination portant sur une profondeur, et sur une position latérale d'un point du fond, sondé par le système sonar de la figure 1,
- la figure 9 représente schématiquement des faisceaux d'ondes acoustiques, émis successivement par le système sonar de la figure 1 au cours d'un deuxième procédé, permettant à la fois de relever la topographie d'un fond marin et de déterminer un profil de célérité moyenne des ondes acoustiques dans le milieu sondé,
- la figure 10 représente schématiquement des trajets suivis par des ondes acoustiques émises au cours de ce deuxième procédé,
- la figure 11 représente schématiquement un écart entre deux estimations distinctes d'une même profondeur, en fonction de la célérité moyenne employée pour déterminer ces deux estimations,
- la figure 12 représente schématiquement des valeurs de célérité moyenne déterminées au moyen de ce deuxième procédé, pour différentes profondeurs, ainsi que des valeurs de référence de cette célérité connue par ailleurs,
- la figure 13 représente schématiquement un profil de vitesse de propagation locale des ondes acoustiques, déterminé au cours de ce deuxième procédé,
- la figure 14 représente schématiquement le trajet d'une onde acoustique émise par une balise immergée, et reçue par le système sonar de la figure 1, vu de dessus,
- la figure 15 représente schématiquement le trajet de l'onde acoustique de la figure 14, vue de côté.

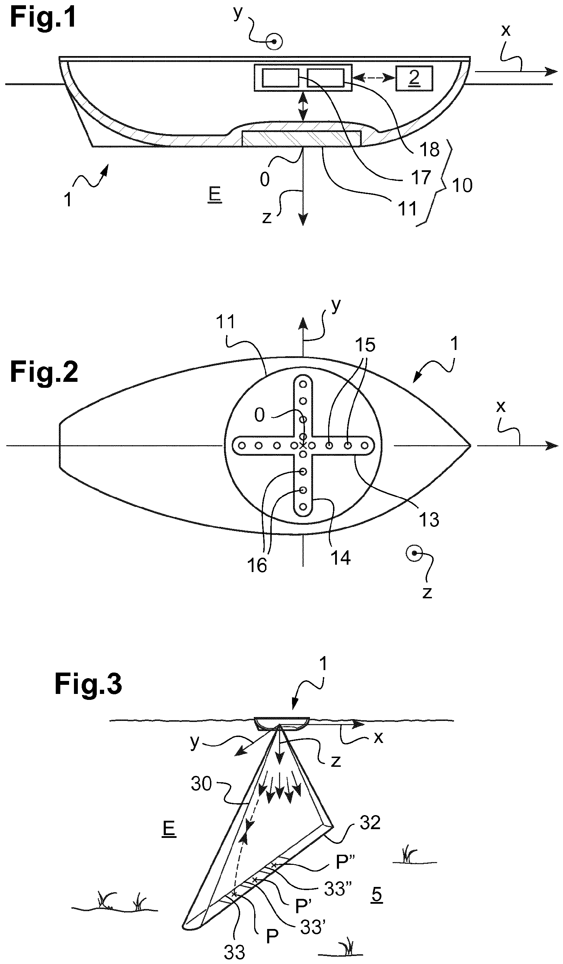

Les figures 1 et 2 représentent schématiquement un système sonar 10 équipant un navire 1, en l'occurrence un navire de surface.

Un aspect remarquable de ce système sonar 10 est qu'il est configuré de manière à déterminer des positions de points sondés (profondeurs et positions latérales des points sondés) en tenant compte, de manière à la fois simple et précise, de la réfraction des ondes acoustiques causée par les variations de la vitesse de propagation de ces ondes en fonction de la profondeur.

La structure de ce système sonar 10 autorise différents modes de fonctionnement. Elle permet notamment de :

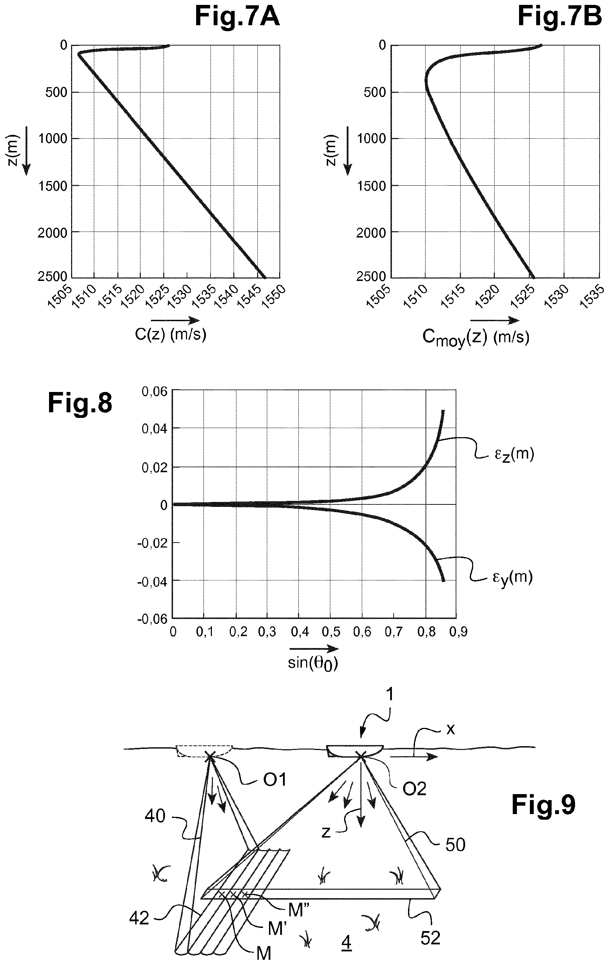

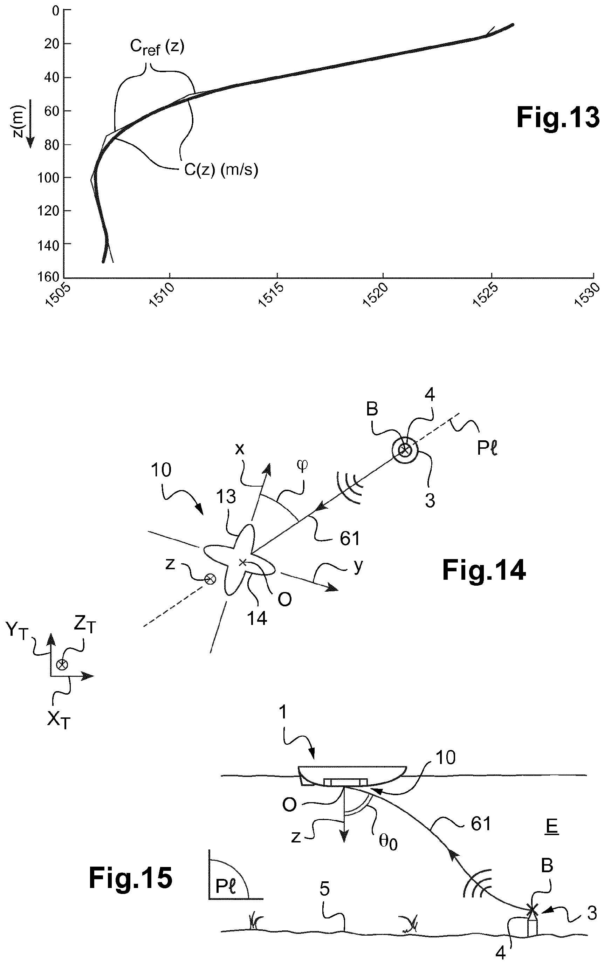

- déterminer un profil bathymétrique du fond marin, c'est-à-dire de réaliser un relevé de la topographie de ce fond, sur la base d'un profil de célérité moyenne du son dans le milieu subaquatique relevé au préalable (premier procédé, décrit en référence aux figures 3 à 8),
- déterminer un tel profil bathymétrique, ainsi qu'un profil de célérité moyenne du son, ce profil de célérité moyenne étant déterminé sur la base des relevés bathymétriques eux-mêmes (deuxième procédé, décrit en référence aux figures 9 à 13), et
- déterminer une position d'une balise, ou d'un autre système immergé, par rapport au système sonar 10 (troisième procédé, décrit en référence aux figures 14 et 15).

La structure du système sonar 10 sera décrite dans un premier temps, en référence aux figures 1 à 5, et ces différents modes de fonctionnement seront décrits ensuite.

Système sonar

Le système sonar 10, représenté schématiquement sur la figure 1, comprend :

- une tête sonar 11, comportant plusieurs transducteurs 15, 16 ainsi qu'une unité de commande de ces transducteurs (non représentée),
- une unité de pilotage 17 de la tête sonar 11, et
- une unité de traitement 18 des signaux acquis par la tête sonar.

L'unité de commande des transducteurs 15, 16 peut comprendre des convertisseurs numérique-analogique et analogique-numérique, ainsi que des amplificateurs et filtres électroniques, adaptés pour mettre en forme des signaux électriques alimentant les transducteurs ou pour amplifier et filtrer des signaux de réception captés par certains de ces transducteurs, utilisés en réception.

Les transducteurs 15, 16 du système sonar 10 sont disposés en croix (disposition dite en « croix de Mills ») :

- certains transducteurs 15 sont disposés en ligne les uns à la suite des autres, le long d'une première branche de la croix, et forment ensemble une première antenne 13, tandis que
- les autres transducteurs 16 sont disposés les uns à la suite des autres le long d'une deuxième branche de la croix, perpendiculaire à sa première branche, et forment ensemble une deuxième antenne 14 (figure 2).

La distance d entre deux transducteurs 15 voisins de la première antenne 13 est constante le long de cette antenne, et il en est de même pour les transducteurs 16 de la deuxième antenne 14.

La tête sonar 11 est ici insérée dans un logement formé dans la coque du navire 1, et elle est orientée de sorte que la première antenne 13 (la première branche de la croix de Mills) soit parallèle à un axe longitudinal x du navire 1, la deuxième antenne 14 étant quant à elle parallèle à un axe transversal y du navire.

La coque du navire présente une forme allongée selon l'axe longitudinal x en question, et, lorsque le navire se déplace en ligne droite, sa direction de marche coïncide avec cet axe longitudinal x (effets de dérive mis à part). L'axe transversal y est perpendiculaire à l'axe longitudinal x, et parallèle au pont du navire.

Ici, chaque transducteur 15, 16 du système sonar 10 est apte à émettre des ondes acoustiques dans le milieu subaquatique E environnant le navire, mais aussi à recevoir des ondes acoustiques provenant de ce milieu (en particulier des ondes acoustiques réfléchies par le fond marin). Chacun de ces transducteurs 15, 16 est donc apte à fonctionner aussi bien en tant qu'émetteur qu'en tant que récepteur.

Chacune des première et deuxième antenne 13 et 14 présente une longueur qui, de préférence, est supérieure à 20 centimètres, voire supérieure à 50 centimètres, grâce à quoi cette antenne peut émettre ou recevoir des ondes acoustiques de manière directive, avec une résolution angulaire élevée.

Le caractère directif de ces antennes est présenté ci-dessous, dans le cas où la première antenne 13 est employée en tant qu'antenne émettrice et où la deuxième antenne 14 est employée en tant qu'antenne réceptrice. Dans ce cas, la première antenne 13 émet des ondes acoustiques formant un faisceau 30 d'ondes acoustiques, en quelque sorte aplati, qui :

- présente une grande ouverture angulaire, de plusieurs dizaines de degrés, dans un plan d'émission perpendiculaire à la première antenne 13,
- mais qui présente une ouverture angulaire réduite (par exemple inférieure à 5 degrés) perpendiculairement à ce plan d'émission (C.f. : figure 3).

Ce faisceau 30 d'ondes acoustiques se propage ainsi sous la forme d'une nappe peu épaisse, en forme d'éventail, généralement appelée « fauchée ». Cette émission est directive, en ce sens que le faisceau émis présente, parallèlement à l'antenne émettrice (donc ici parallèlement à l'axe longitudinal x), ladite ouverture angulaire réduite. La zone du fond 4 marin atteinte par ce faisceau 30 correspond alors à une bande 32 mince et longue, perpendiculaire à l'antenne émettrice.

Cette bande 32 est constituée de plusieurs petites portions élémentaires du fond 4 marin, 33, 33', 33"... réparties le long de cette bande, et centrées chacune sur un point P, P', P".... Chacun de ces portions élémentaire 33, 33', 33" du fond marin réfléchit une onde acoustique, qui, à la manière d'un écho, est renvoyée vers le système sonar 10. Cette onde réfléchie est ensuite réceptionnée par la deuxième antenne 14.

Grâce au caractère directif de la deuxième antenne 14, le système sonar 10 est capable de distinguer l'une de l'autre deux ondes acoustiques reçues, provenant respectivement de portions 33, 33', 33" du fond marin distinctes, qui occupent des positions différentes le long de la bande 32 insonifiée mentionnée ci-dessus. Cela permet alors de déterminer la profondeur et la position latérale de chacune de ces portions élémentaires, c'est-à-dire la profondeur et la position latéral du point P, P', P" sur lequel elles sont centrées.

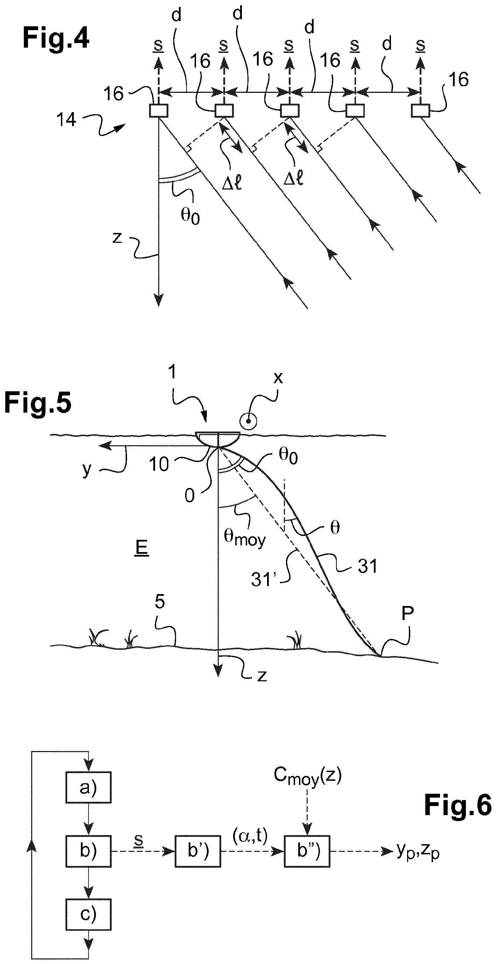

Le caractère directif de la deuxième antenne 14 (employée ici en réception) est expliqué ci-dessous, en référence à la figure 4.

Chaque transducteur 16 de cette antenne est apte à délivrer un signal de réception s, représentatif des variations instantanées, à la position où se trouve ce transducteur, d'une onde acoustique reçue par l'antenne. Lorsque cette onde n'est pas reçue en incidence normale, ces signaux de réception s sont décalés temporellement les uns par rapport aux autres, d'une quantité qui dépend directement de l'angle de réception $\theta_o$, c'est à dire de l'angle d'incidence sous lequel l'onde acoustique est reçue par l'antenne. En l'occurrence, le décalage temporel $\Delta t$ entre deux desdits signaux de réception s est donné par la formule F1 suivante :

$$\Delta t = \Delta l/c_o = \frac{d.\sin(\theta_o)}{c_o} = d.\alpha \quad \text{(F1)}.$$

Dans cette formule, $c_o$ est la vitesse de propagation locale des ondes acoustiques, à la profondeur $z_o$ de la deuxième antenne 14 (profondeur $z_o$ qui est ici quasiment nulle). Quant à l'angle de réception $\theta_o$, il est formé entre une direction perpendiculaire à l'antenne, qui coïncide ici avec l'axe vertical z, et une direction de propagation présentée par l'onde acoustique au niveau de l'antenne 14 (c'est-à-dire là où est située l'antenne 14).

Un traitement approprié des signaux de réception s permet alors d'extraire de ces signaux une composante représentative de l'onde, ou des ondes acoustiques, reçues par l'antenne sous un angle de réception $\theta_o$ donné. Des ondes reçues respectivement sous des angles d'incidence différents (et provenant donc de points P, P', P" du fond marin différents) peuvent ainsi être distinguées les unes des autres par le système sonar 10. Le traitement en question, qui est un traitement classique de formation de voies, peut par exemple consister à appliquer, à chaque signal de réception s, un décalage temporel proportionnel à la position occupée par le transducteur correspondant le long de l'antenne 14, puis à sommer les signaux de réception ainsi décalés.

Comme le montre la formule F1 ci-dessus, c'est sous la forme d'une constante de propagation $\alpha$ que l'angle de réception $\theta_o$ de l'onde reçue intervient, dans le décalage temporel $\Delta t$ entre deux des signaux de réception s.

Cette constante de propagation $\alpha$, généralement appelée constante de Snell-Descartes, est égale au sinus de l'angle de réception $\theta_o$ divisé par la vitesse de propagation locale $c_o$ des ondes acoustiques à la profondeur $z_o$ de la deuxième antenne 14 : $\alpha = \sin(\theta_o)/c_o$.

Cette quantité est appelée constante de propagation, car, conformément à la loi dites de Snell-Descartes, le rapport $\sin(\theta)/c$ entre :

- le sinus de l'angle d'inclinaison $\theta$, formé entre la verticale et la direction de propagation de l'onde acoustique au point considéré, et
- la vitesse de propagation locale c des ondes acoustiques en ce point,

présente la même valeur en chaque point du chemin 31 (figure 5) suivi par cette onde acoustique dans le milieu subaquatique E (ainsi, la quantité sin($\theta$) /c, constante, est égale à sin($\theta_o$) /c$_o$ quel que soit le point considéré le long de la trajectoire 31 suivie par cette onde).

Quoi qu'il en soit, l'unité de traitement 18 du système sonar 10 est programmée pour, après chaque émission d'un faisceau d'ondes acoustiques tel que celui décrit plus haut :

- acquérir les différents signaux de réception s, captés par les transducteurs 16 de la deuxième antenne 14 en réponse à l'émission de ce faisceau d'ondes acoustiques,
- déterminer, en fonction de ces signaux de réception s, qu'une onde acoustique ayant une constante de propagation $\alpha$ donnée a été reçue à un instant de réception, puis
- déterminer une durée $\tau$ entre un instant d'émission du faisceau d'ondes acoustiques, et l'instant de réception de cette onde acoustique (par la deuxième antenne 14).

Comme on le verra dans la suite, le couple de données qui comprend cette durée $\tau$ et la constante de propagation $\alpha$ de l'onde reçue et permet à l'unité de traitement 18 de déterminer la profondeur et la position latérale de l'élément du milieu subaquatique E ayant réfléchit ladite onde acoustique (lors la propagation de cette onde depuis la première antenne 13 jusqu'à la deuxième antenne 14).

Les caractéristiques de fonctionnement des première et deuxième antennes 13 et 14 ont été présentées ci-dessus dans un cas où la première antenne 13 fonctionne en émission tandis que la deuxième antenne 14 fonctionne en réception. Les rôles respectifs de ces deux antennes 13, 14 peuvent toutefois être permutés, la première antenne 13 jouant alors le rôle d'antenne réceptrice, et la deuxième antenne 14 jouant le rôle d'antenne émettrice.

Pour ce qui est maintenant des unités de pilotage 17 et de traitement 18 du système sonar 10, elles sont réalisées chacune au moyen d'un circuit électronique comprenant au moins un processeur et une mémoire, et, de manière remarquable, elles sont programmées pour exécuter un ou plusieurs des procédés décrits ci-dessous. Le système comprend également une antenne GPS (selon l'acronyme anglo-saxon de « Global Positioning system ») qui fournit une position absolue du système dans le référentiel terrestre, et une centrale d'attitude comprenant au moins un gyromètre, qui délivre des signaux représentatifs des mouvements angulaires du système dans ce référentiel (tangage et roulis notamment). Les mouvements angulaires du bateau sont alors compensés à l'émission et à la réception des ondes, en modifiant électroniquement les directions d'émission et de réception en fonction des signaux délivrés par la centrale d'attitude. Dans la suite de l'exposé on a considéré que ces mouvements étaient parfaitement compensés.

Premier procédé : détermination d'un profil bathymétrique sur la base d'un profil de célérité moyenne du son.

Comme déjà indiqué, au cours de ce premier procédé, la topographie du fond marin situé sous le navire 1 est déterminée, par mesures de temps de propagation d'ondes acoustiques, sur la base d'un profil de célérité moyenne du son dans le milieu subaquatique, c$_{moy}$(z).

Au cours de ce premier procédé, les transducteurs 15 de la première antenne 13 fonctionnent en émission (cette antenne est employée en tant qu'antenne émettrice). Les transducteurs 16 de la deuxième antenne 14 fonctionnent quant à eux en réception (la deuxième antenne 14 est employée en tant qu'antenne réceptrice).

Ce procédé comprend les étapes suivantes (figure 6) :

a) émission d'un train d'ondes acoustiques par la première antenne 13, (l'extension temporelle de ce train d'onde étant par exemple de l'ordre d'une milliseconde ou de quelques millisecondes), sous la forme du faisceau d'ondes acoustiques 30 qui a été décrit plus haut, puis

b) acquisition des signaux de réceptions s, captés par les transducteurs 16 de la deuxième antenne 14 en réponse à l'émission de l'étape a).

Les signaux de réception ainsi acquis permettent à l'unité de traitement de déterminer les profondeurs et positions latérales de plusieurs points P, P', P" du fond 5 marin situés le long d'une ligne de mesure, perpendiculaire à la première antenne 13 (et donc perpendiculaire ici à l'axe longitudinal x du navire 1) et située à l'aplomb du navire 1 (cette ligne de mesure correspond à la ligne moyenne le long de laquelle s'étend la mince bande 32 du fond 5 marin atteinte par les ondes 30 émises à l'étape a)).

Les étapes a) et b) sont suivies par une étape c), au cours de laquelle le navire se déplace légèrement, parallèlement à son axe longitudinal x, jusqu'à une nouvelle position.

Les étapes a) et b) sont ensuite exécutées à nouveau, ce qui permet de déterminer les profondeurs et positions latérales de points du fond situés le long d'une autre ligne de mesure, légèrement décalée par rapport à la précédente le long de l'axe longitudinal x.

Exécuter ainsi l'ensemble des étapes a), b) et c) plusieurs fois successivement permet de relever, ligne par ligne, les positions de différents points d'une surface tridimensionnelle, représentative de la topographie du fond marin considéré.

Les signaux de réceptions s acquis lors de chaque exécution de l'étape b) sont traités lors d'étapes de traitement b') et b").

Au cours de l'étape b'), l'unité de traitement 18 détermine, en fonction des signaux de réception s acquis à l'étape b), plusieurs couples de données $(\alpha, \tau)$ associés chacun à l'une des ondes acoustiques reçues par la deuxième antenne 14 à l'étape b). Chacun de ces couples de données comprend la constante de propagation $\alpha$ de cette onde acoustique, ainsi que la durée $\tau$ séparant l'instant d'émission et l'instant de réception de cette onde.

Au cours de l'étape b"), l'unité de traitement 18 détermine, pour chacun de ces couples de données $\alpha$ et $\tau$, une profondeur $z_P$ et une position latérale $y_P$ de la petite portion 33 du fond 5 marin ayant réfléchit l'onde acoustique considérée, lors de sa propagation (aller et retour) depuis la première antenne 13 d'émission jusqu'à la deuxième antenne 14 de réception. Cette profondeur $z_P$ et cette position latérale yp repèrent plus précisément le point P du fond sur lequel est centrée cette petite portion 33 de fond marin.

La position latérale yp du point P est la coordonnée de ce point le long de l'axe transversal y (axe longitudinal y dont l'origine est située au centre O de la tête sonar 11). Cette position latérale yp est donc égale à l'écart latéral, par rapport à la verticale, entre le point P considéré et la deuxième antenne 14 (antenne réceptrice).

D'autre part, c'est en fait la différence de profondeur $\Delta z$ entre le point P et la tête sonar 11 qui est déterminée par l'unité de traitement 18, sur la base de la durée $\tau$. Mais la tête sonar 11 est située ici quasiment en surface du milieu subaquatique E, et, pour la simplicité de l'exposé, la différence de profondeur $\Delta z$ est considérée ici comme étant égale à la profondeur $z_P$ du point sondé. Cette profondeur $z_P$, parfois appelée immersion, est égale à la distance entre le point P et la surface du milieu subaquatique E, mesurée verticalement.

Il est noté par ailleurs que la durée $\tau$, entre les instants d'émission et de réception de l'onde acoustique réfléchie par le point P, est égale au temps mis par cette onde acoustique pour, à l'aller, se propager de la première antenne 13 jusqu'au point P, puis, au retour, pour se propager de ce point P jusqu'à la deuxième antenne 14. En l'occurrence, les trajets respectifs suivis par cette onde, respectivement à l'aller et au retour, sont identiques (figure 5). La durée $\tau$ est ainsi égale au double du temps de propagation t nécessaire pour que cette onde acoustique se propage, depuis le point P considéré jusqu'à la deuxième antenne réceptrice, 14.

La méthode mise en œuvre par l'unité de traitement 18, pour déterminer la profondeur $z_P$ et la position latérale $y_P$ du point P sondé est particulièrement remarquable en ce qu'elle permet de tenir compte de la réfraction des ondes acoustiques, causées par les variations de la vitesse de propagation c de ces ondes en fonction de la profondeur z, de manière à la fois simple et précise.

Cette méthode est basée sur un modèle de propagation dans lequel il est supposé que l'onde acoustique reçue s'est propagée :

- en ligne droite depuis le point P du fond 5 jusqu'à la deuxième antenne 14 (et d'ailleurs aussi en ligne droite depuis la première antenne 13, jusqu'au point P),
- et avec une célérité moyenne $c_{moy}(z_P)$ ne dépendant que de la profondeur $z_P$ du point P considéré (cette célérité moyenne étant notamment indépendante de l'inclinaison de la direction de propagation de cette onde par rapport à la verticale).

Dans ce modèle, la profondeur $z_P$ et la position latérale yp du point P s'expriment donc conformément aux formules F2 et F3 suivantes :

$$z_P = c_{moy}(z_P).t.\cos(\theta_{moy}) \quad \text{(F2)}$$

$$y_P = c_{moy}(z_P).t.\sin(\theta_{moy}) \quad \text{(F3)}$$

où :

- le temps de propagation t est égal à la moitié de la durée $\tau$ séparant les instants d'émission et de réception de l'onde acoustique : $t = \tau/2$, et où
- $\theta_{moy}$ est un angle de propagation moyen, défini entre la verticale et une direction de propagation effective de l'onde acoustique (direction de propagation moyenne de l'onde acoustique, entre le point P et la deuxième antenne 14).

Autrement formulé, l'angle de propagation moyen $\theta_{moy}$ est défini entre l'axe vertical z et la droite 31' qui relie le point P à la deuxième antenne 14. Cette droite 31' correspond au chemin effectif, rectiligne, qui est supposé être suivi par l'onde acoustique dans ce modèle.

Moyennant un choix approprié de la célérité moyenne $c_{moy}(z_P)$ et de l'angle de propagation moyen $\theta_{moy}$, il s'avère que ce modèle permet une détermination très fiable et précise de la profondeur $z_P$ et de la position latérale yp du point P ayant réfléchi l'onde reçue.

En l'occurrence, l'angle de propagation moyen $\theta_{moy}$ est déterminé en fonction de la constante de propagation $\alpha$ de l'onde acoustique reçue (il dépend en effet de l'angle de réception $\theta_o$ sous lequel cette onde est reçue par la deuxième antenne), et en fonction de ladite célérité moyenne $c_{moy}(z_P)$, ou éventuellement d'une célérité arithmétique moyenne $\bar{c}(z_P)$ de l'onde acoustique sur ce trajet effectif. Cette célérité arithmétique moyenne $\bar{c}(z_P)$ est égale à la moyenne arithmétique d'une pluralité de valeurs de la vitesse de propagation locale c(z), présentées par les ondes acoustiques à une pluralité respective de profondeurs z allant de la profondeur $z_P$ du point P jusqu'à la profondeur z=0 de la deuxième antenne 14 (réceptrice) :

$$\bar{c}(z_P) = \frac{1}{z_P} \int_0^{z_P} c(z)\,dz \qquad (F4).$$

Le fait que la célérité moyenne $c_{moy}(z_P)$ soit indépendante de la direction de propagation effective de l'onde acoustique facilite grandement le traitement des données acquises et la détermination de la profondeur et de la position latérale de chaque point du fond sondé par le système sonar.

En particulier, la profondeur $z_P$, ainsi que la valeur de la célérité moyenne $c_{moy}(z_P)$ correspondante peuvent être déterminées dans un premier temps, *indépendamment de la position latérale $y_P$ du point P,* ce qui permet de réduire le temps de calcul nécessaire à cette détermination (la position latérale $y_P$ étant déterminée ensuite, sur la base de la valeur de la célérité moyenne ainsi déterminée). Cette réduction de temps de calcul est d'autant plus intéressante ici que les profondeurs et positions latérales de plusieurs points P, P', P" du fond sont déterminées, à chaque répétition de l'étape b").

La célérité moyenne $c_{moy}(z_P)$ est égale à la moyenne harmonique d'une pluralité de valeur de la vitesse de propagation locale c(z), présentées par les ondes acoustiques à une pluralité respective de profondeurs z allant de la profondeur $z_P$ du point P jusqu'à la profondeur z=0 de la deuxième antenne 14 (réceptrice), soit :

$$\frac{1}{c_{moy}(z_P)} = \frac{1}{z_P} \int_0^{z_P} \frac{1}{c(z)}\,dz \qquad (F5)$$

Il est noté que la quantité $\int_0^{z_P} \frac{1}{c(z)}\,dz = \int_0^{z_P} dt_{vert} = t_{vert}$ est égale à la durée $t_{vert}$ que mettrait une onde acoustique pour se propager, à la verticale, depuis la profondeur $z_P$ du point sondé, jusqu'à la profondeur z=0 de l'antenne réceptrice. La célérité moyenne $c_{moy}(z_P)$ est donc égale à la différence de profondeur $z_P$ entre le point P sondé et la deuxième antenne 14, divisée par cette durée $t_{vert}$.

Quant à l'angle de propagation moyen $\theta_{moy}$, il est déterminé ici par l'unité de traitement 18 de sorte que son sinus soit égal au produit de la constante de propagation $\alpha$ de l'onde considérée, multipliée par la célérité moyenne $c_{moy}(Z_P)$ :

$$\sin(\theta_{moy}) = \alpha.c_{moy}(z_P) \qquad (F6)$$

L'unité de traitement 18 est donc programmée pour déterminer la profondeur $z_P$ et la position latérale $y_P$ du point P, soit conformément aux formules F2 et F3 ci-dessus (l'angle de de propagation moyen $\theta_{moy}$ étant alors déterminé conformément à la formule F6), soit directement au moyen des formules F7 et F8 ci-dessous :

$$z_P = c_{moy}(z_P).t.\sqrt{1 - \left(\alpha.c_{moy}(z_P)\right)^2} \qquad (F7)$$

$$y_P = c_{moy}(z_P).t.\left(\alpha.c_{moy}(z_P)\right) \qquad (F8).$$

Dans ce premier procédé, un profil de la célérité moyenne du son, rassemblant plusieurs valeurs présentées par la célérité moyenne $c_{moy}(z)$ pour une pluralité respective de profondeurs z dans le milieu subaquatique, est préenregistré dans la mémoire de l'unité de traitement 18.

Sur la base de ce profil de célérité moyenne, préenregistré, et des données $t=\tau/2$ et $\alpha$ mesurées, l'unité de traitement 18 cherche la profondeur $z_P$ qui satisfait la formule F7 (par exemple de manière itérative, comme expliqué plus bas). Une fois cette profondeur déterminée, la position latérale $y_P$ du point P est déterminée, en calculant directement la quantité $c_{moy}(z_P).t.(\alpha.c_{moy}(z_P))$ (formule F8).

Le profil de la célérité moyenne $c_{moy}(z)$ est mesuré puis enregistré dans la mémoire de l'unité de traitement 18 lors d'une phase préliminaire de ce procédé. Lors de cette phase préliminaire, une sonde, munie d'un capteur apte à mesurer la vitesse locale de propagation c des ondes acoustiques à la profondeur z de la sonde, est positionnée successivement à plusieurs profondeurs dans le milieu subaquatique E. Un profil c(z) de la vitesse locale de propagation est ainsi relevé. En variante, cette sonde pourrait par exemple être munie de capteurs aptes à déterminer la température et la salinité de l'eau à la profondeur de la sonde, quantités qui permettent ensuite de déterminer la vitesse locale de propagation c(z) à la profondeur considérée.

Le profil de la célérité moyenne $c_{moy}(z)$ est déterminé ensuite, sur la base du profil c(z) de la vitesse locale de propagation relevé précédemment, par intégration numérique, conformément à la formule F5.

La figure 7A représente un exemple de profil c(z) de la vitesse locale de propagation (exprimée en mètres par seconde), mesuré pour des profondeurs (exprimées en mètres) comprises entre 0 et 2500 mètres. Comme on peut le constater sur cet exemple, les variations de la vitesse locale de propagation c avec la profondeur z, sur cette gamme de profondeur, peuvent atteindre 20%. Il est donc effectivement souhaitable, comme c'est le cas ici, de tenir compte de ces variations lors de l'analyse des temps de propagation mesurés.

La figure 7B montre le profil de la célérité moyenne $c_{moy}(z)$ (en mètres par seconde) déduit du profil de la vitesse locale de propagation c(z) de la figure 7A. Cet exemple illustre bien que les variations de la célérité moyenne $c_{moy}(z)$ avec la profondeur z (exprimées en mètre) sont plus progressives que les variations de la vitesse locale de propagation c(z) avec la profondeur. En effet, l'opération d'intégration numérique correspondant à la formule F5 a un effet de filtre passe-bas. Elle élimine certaines variations rapides de la vitesse de propagation c(z), ainsi que différents bruits affectant les mesures de cette vitesse. Le fait de déterminer les profondeurs des points sondés sur la base du profil de célérité moyenne $c_{moy}(z)$ plutôt que sur la base du profil de vitesse locale de propagation du son c(z) permet donc de s'affranchir de ces bruits, et d'améliorer la précision de détermination de ces profondeurs.

Un exemple de méthode itérative, permettant de déterminer la profondeur $z_P$ du point P sondé, de manière à ce qu'elle satisfasse la formule F7, est décrite maintenant.

Cette méthode comprend une étape de détermination d'une estimation $z_{P,i}$ de la profondeur $z_P$, et d'une estimation $c_{moy,i}$ de la célérité moyenne correspondante $c_{moy}(z_P)$. Cette étape d'estimation est exécutée plusieurs fois successivement, de manière itérative.

Lors de l'exécution numéro i de cette étape, une nouvelle estimation $c_{moy,i}$ de la célérité moyenne est déterminée, sur la base d'un estimation précédente $z_{P,i-1}$ de la profondeur $z_P$, et sur la base du profil de célérité moyenne préenregistré, conformément à la formule F9 suivante :

$$c_{moy,i} = c_{moy}\left(z_{P,i-1}\right) \qquad (F9).$$

Une nouvelle estimation $z_{P,i}$ de la profondeur $z_P$ est ensuite déterminée en remplaçant la célérité moyenne $c_{moy}(z_P)$ par son estimation $c_{moy,i}$, dans la formule F7, soit :

$$z_{P,i} = c_{moy,i}.t.\sqrt{1 - \left(\alpha.c_{moy,i}\right)^2} \qquad (F10)$$

Cette méthode itérative débute par exemple à partir de l'estimation initiale $c_{moy,1} = c_{moy}(z=0)$ de la célérité moyenne.

Les exécutions successives de l'étape d'estimation en question cessent lorsqu'un écart $|c_{moy,i+1} - c_{moy,i}|$ entre deux estimations successives $c_{moy,i+1}$ et $c_{moy,i}$ de la célérité moyenne devient inférieur à un seuil donné. En pratique, ce seuil peut par exemple être compris entre 1 mètre par seconde et 1 millimètre par seconde. En variante, les exécutions successives de cette étape d'estimation pourraient être arrêtées lorsqu'un écart relatif entre deux estimations successives $z_{P,i+1}$ et $z_{P,i}$ de la profondeur $z_P$ devient inférieur à une précision requise donnée.

La figure 8 représente schématiquement une erreur $\varepsilon_z$, représentative d'un écart entre la profondeur réelle d'un point sondé P, et la profondeur $z_P$ déterminée sur la base du modèle monocouche du milieu subaquatique E présenté ci-dessus (modèle dans lequel ce milieu est représenté par une couche homogène effective, dans laquelle la propagation est rectiligne). Cette erreur $\varepsilon_z$ est représentée en fonction du sinus de l'angle de réception $\theta_o$, pour une profondeur du point sondé de 200 mètres.

Une erreur $\varepsilon_y$, représentative d'un écart entre la position latérale réelle d'un point sondé P, et sa position latérale $y_P$ déterminée sur la base de ce modèle, est également représentée sur la figure 8.

Les deux erreurs $\varepsilon_z$ et $\varepsilon_y$ représentées sur cette figure ont été déterminées par simulation numérique, sur la base du profil de vitesse de propagation c(z) de la figure 7A. Pour cela, les trajets respectifs suivis par des ondes acoustiques, émises avec directions de propagation initiales différentes, ont été déterminés en tenant compte de la réfraction de proche en proche (couche par couche), jusqu'à une profondeur de 200 mètres. Cette simulation a permis de déterminer le temps de propagation t, qui aurait mesuré en pratique pour une onde suivant un tel trajet, puis d'en déduire la profondeur $z_P$ et la position latérale $y_P$, qui auraient été déterminées en pratique par l'unité de traitement sur la base de ce temps de propagation t. L'erreur $\varepsilon_z$ est égale à l'écart entre la profondeur $z_P$, issue de cette simulation d'une mesure de profondeur, et la profondeur de référence employée, de 200 mètres. L'erreur $\varepsilon_y$ est égale quant à elle à l'écart entre la position latérale $y_P$, telle qu'elle aurait été déterminée par l'unité de traitement, et la position latérale issue du tracé du trajet de l'onde acoustique considéré, réalisé de proche en proche, couche par couche. Cette simulation a été réalisée pour des valeurs de l'angle de réception $\theta_o$ comprises entre 0 et 60 degrés (et donc pour des valeurs de $\sin(\theta_o)$ comprises entre 0 et 0,85 environ).

Comme on peut le voir sur cette figure, même lorsque les ondes acoustiques reçues sont très inclinées par rapport à la verticale (situation dans laquelle leurs trajectoires sont fortement courbées par réfraction), les erreurs $\varepsilon_z$ et $\varepsilon_y$ restent extrêmement petites : ces erreurs restent inférieures à 5 centimètres, alors que la profondeur sondée est de 200 mètres. Pour des angles de réception inférieurs à 30 degrés, ces erreurs sont même inférieures à 3 millimètres.

On constate ainsi, sur cet exemple, que la méthode de détermination mise en œuvre par l'unité de traitement 18 conduit à des valeurs très fiables et précises de profondeur et de position latérale, tout en simplifiant considérablement la détermination numérique de ces grandeurs par rapport à une détermination qui serait basée sur un tracé point par point du trajet suivi par l'onde.

Le fait que ce modèle monocouche conduise à des résultats précis peut s'expliquer en partie sur la base des arguments théoriques présentés ci-dessous.

Tout d'abord, il est connu dans le domaine des mesures sismiques que le temps de propagation t d'une onde sismique entre une point source et un récepteur est donné, en bonne approximation, par la formule F11 ci-dessous :

$$t^2 = t_{vert}^2 + y^2/c_{RMS}^2 \qquad \text{(F11)}$$

où :

- y désigne l'écart latéral, par rapport à la verticale, entre le point source considéré et le récepteur,
- $t_{vert}$ est le temps que mettrait une onde sismique pour se propager, *verticalement,* depuis la profondeur z du point source considéré jusqu'à celle du récepteur (grandeur qui a déjà été mentionnée plus haut, lors de la présentation de la formule F5), et où
- $c_{RMS}$ est une célérité quadratique moyenne, le long du trajet suivi par l'onde sismique : $c_{RMS}^2 = \frac{1}{t} \int_0^t c^2(t)\, dt$ .

Cette formule (mentionnée par exemple dans le chapitre 5 de l'ouvrage « Geophysical Signal Processing » de E.A. Robinson, T.S. Durrani et L.G. Peardon, Prentice Hall, 1986, ISBN 0133526674), est utilisée habituellement dans le domaine des mesures sismiques pour aligner temporellement différents signaux reçus, afin de pouvoir ensuite sommer ces signaux pour améliorer le rapport signal sur bruit par effet de moyenne.

En l'occurrence, le temps de propagation « à la verticale », $t_{vert}$, est égal à la profondeur z, divisée par la moyenne harmonique $c_H(z)$ de la vitesse de propagation locale c, entre cette profondeur z et la surface :

$$t_{vert} = \frac{z}{c_H(z)} = z. \int_0^z \frac{1}{c(z')} dz' \ .$$

Par ailleurs, dans un milieu subaquatique, à la différence d'un milieu géologique, la célérité harmonique moyenne $c_H$ est très proche de la célérité quadratique moyenne $c_{RMS}$. Par exemple, dans le cas du milieu subaquatique E considéré ici, dont le profil de vitesse de propagation est tracé sur la figure 7A, la différence entre la célérité harmonique moyenne $c_H$ et la célérité quadratique moyenne $c_{RMS}$ reste inférieure à 2 centimètres par seconde, pour toute la plage de profondeurs considérée. Il est noté d'ailleurs que, dans ce milieu subaquatique, la célérité harmonique moyenne $c_H$

et la célérité arithmétique moyenne $\bar{c}$ sont elles aussi très proches l'une de l'autre, puisqu'elles sont reliées à la célérité quadratique moyenne $C_{RMS}$ par la relation suivante: $c_{RMS}^2 = c_H.\bar{c}$ (la célérité quadratique moyenne est égale à la moyenne géométrique de célérité harmonique moyenne, et de la célérité arithmétique moyenne).

Pour des mesures réalisées en milieu liquide, on a donc, en bonne approximation :

$$t^2 = (z^2 + y^2)/c_H^2 \ .$$

Or, dans le modèle de propagation monocouche qui a été présenté plus haut, le temps de propagation t est relié à la profondeur $z_P$ et la position latérale yp du point sondé par la relation suivante :

$$t^2 = (z_P^2 + y_P^2)/c_{moy}^2$$

où $c_{moy}$ est la célérité moyenne, effective, dans l'unique couche considérée.

Pour que ce modèle de propagation soit le plus représentatif possible du lien physique réel entre le temps de propagation t et les coordonnées $z_P$, $y_P$, il doit donc effectivement être paramétré en choisissant, pour la célérité moyenne $c_{moy}(z_P)$, la célérité harmonique $c_H$ mentionnée ci-dessus, soit, comme déjà indiqué :

$$c_{moy}(z_P) = c_H(z_P) = \left(\frac{1}{z_P} \int_0^{z_P} \frac{1}{c(z)} dz\right)^{-1} .$$

Par ailleurs, en étendant et modifiant certains résultats présentés dans le document « Approximate Methods For Ray Tracing », M.J. Daintith, SaclantCen Conference proceedings N°5, Septembre 1971, l'inventeur a démontré les résultats suivants : un développement des équations de propagation au premier ordre en $\varepsilon(z)$, où $c(z) = \bar{c}\,(1 + \varepsilon(z))$, conduit aux formules suivantes :

$$z_P = \bar{c}\,t\sqrt{1 - \alpha^2\bar{c}^2}\left(1 - \overline{\varepsilon^2}\left\{1 - \frac{A^2}{2} + \frac{3A^4}{2}\right\}\right)$$

et

$$y_P = \alpha\bar{c}^2 t\left(1 + \overline{\varepsilon^2}(2A^2 - 1)\right)$$

avec

$$\alpha\bar{c} = \sin\theta_{moy}, \ A = \tan\theta_{moy}, \ \overline{\varepsilon^2}(z) = \frac{1}{z_P}\int_0^{z_P}\varepsilon^2(z)dz.$$

En négligeant alors les termes en $A^2\overline{\varepsilon^2}$ et $A^4\overline{\varepsilon^2}$ dans ces équations, et en utilisant le fait que, au premier ordre, la célérité harmonique moyenne s'écrit $c_H = \bar{c}[\,1 - \overline{\varepsilon^2}\,]$, on obtient les formules d'approximations suivantes :

$$z_P = (c_H\,t)\sqrt{1 - \alpha^2\bar{c}^2}, \ y_P = (c_H\,t)\,\alpha\bar{c} \ \text{ et } \ D = \sqrt{z_P^2 + y_P^2} = c_H\,t \ .$$

Ces dernières équations montrent que l'angle de propagation moyen à employer est, en très bonne approximation défini par la formule F12 suivante :

$$\sin(\theta_{moy}) = \alpha.\bar{c}(z_P) \qquad (\text{F12}).$$

En approximant la célérité arithmétique moyenne $\bar{c}$ par la célérité harmonique moyenne $c_H$ dans la formule F12, on obtient alors la relation suivante :

$$\sin\left(\theta_{moy}\right) = \alpha. c_H$$

sur la base de laquelle l'unité de traitement 18 détermine la profondeur et la position latérale des points sondés. La validité de l'approximation $\sin(\theta_{moy}) = \alpha.c_H$, montrée ci-dessus d'un point de vue théorique, est justifiée en outre, a posteriori, par la précision des résultats qu'elle permet d'obtenir (C.f. : figure 8).

Les calculs ci-dessus montrent toutefois que l'approximation de la formule F12, $\sin(\theta_{moy}) = \alpha.\bar{c}(z_P)$, est encore meilleure.

En variante, l'unité de traitement 18 pourrait donc être programmée de manière à déterminer la profondeur $z_P$ et la position latérale $y_P$ de chaque point P sondé conformément aux formules F13 et F14 suivantes :

$$z_P = c_{moy}(z_P).t.\sqrt{1 - (\alpha.\bar{c}(z_P))^2} \quad (\text{F13})$$

$$y_P = c_{moy}(z_P).t.(\alpha.\bar{c}(z_P)) \quad (\text{F14}).$$

Dans le premier procédé qui vient d'être décrit, les positions de différents points d'une surface tridimensionnelle, représentative de la topographie du fond 5 marin, est relevé ligne par ligne, grâce au déplacement longitudinal du navire 1.

En variante, le navire pourrait conserver la même position tout au long de ce procédé, la surface tridimensionnelle en question étant alors relevée en faisant varier l'inclinaison du faisceau d'ondes acoustiques 30 émis, entre une émission et la suivante (c'est-à-dire entre deux exécutions successives de l'étape a)), au lieu de systématiquement émettre ce faisceau à la verticale.

En variante encore, au lieu de relever les positions de plusieurs points du fond couvrant toute une région de celui-ci, on pourrait prévoir de ne relever la profondeur et/ou la position latérale que d'un point du fond.

D'autre part, ce premier procédé peut être employé pour déterminer les profondeurs et/ou positions latérales d'éléments immergés autres que des portions du fond marin, tels qu'un poisson, un banc de poissons, ou une partie d'un banc de poissons (ce procédé n'est donc pas seulement un procédé de détermination d'un profil bathymétrique). Les profondeurs et/ou positions latérales de tels éléments sont déterminées de la même manière que ce qui a été expliqué ci-dessus pour un point du fond marin.

Deuxième procédé : détermination d'un profil bathymétrique, et détermination d'un profil de célérité moyenne du son sur la base des relevés bathymétriques eux-mêmes

Dans ce deuxième procédé, comme dans le premier procédé, les profondeurs de différents points du fond marin sont déterminées, à partir de mesures de temps de propagation, sur la base du modèle monocouche (modèle à une couche effective) qui a été décrit plus haut.

Mais ici, à la différence du premier procédé, le profil de célérité moyenne $c_{moy}(z)$ dans le milieu subaquatique E, qui intervient lors de l'analyse des mesures de temps de propagation, n'est pas préenregistré dans une mémoire du système sonar 10 (il n'est pas mesuré préalablement aux relevés de profondeurs).

Dans ce deuxième procédé, la profondeur d'un point donné du fond marin est déterminée, sans connaissance préalable du profil de célérité moyenne, grâce à une comparaison d'au moins deux mesures distinctes de temps de propagation entre le système sonar 10 et le point sondé, ces deux mesures étant réalisées pour deux positions distinctes du système sonar 10 (et donc pour deux inclinaisons différentes des ondes acoustiques reçues).

La comparaison de ces deux temps de propagation permet en outre de déterminer la valeur de la célérité moyenne, $c_{moy}(z_M)$, à la profondeur $z_M$ du point M considéré.

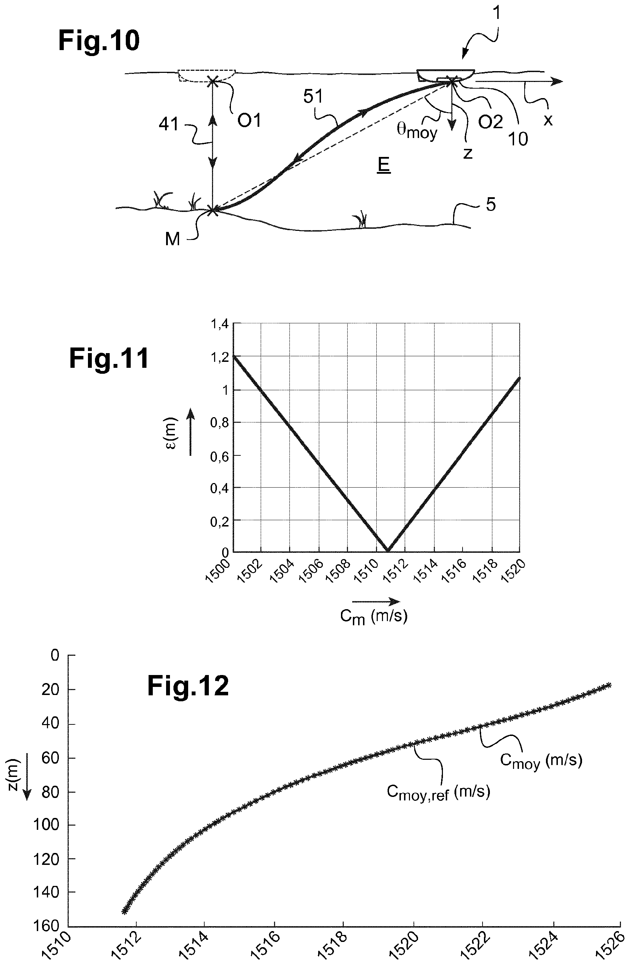

Les figures 9 et 10 représentent schématiquement la façon dont est réalisée une série de mesures de temps de propagation permettant, par comparaison de ces mesures les unes avec les autres, de déterminer :

- les profondeurs respectives de plusieurs points du fond, M, M', M", situés ici le long d'une ligne de mesure parallèle à l'axe longitudinal x du navire 1, et
- les valeurs correspondantes de la célérité moyenne $c_{moy}$ dans ce milieu.

Au cours de cette série de mesures, pour une première position O1 du navire 1, la première antenne 13 émet un faisceau transversal 40 d'ondes acoustiques, tel que le faisceau 30 décrit plus haut en référence à la figure 3. Ce faisceau est émis ici à la verticale, sous le système sonar 10. Le plan moyen défini par ce faisceau, parallèle à l'axe transversal y, s'étend à la verticale sous le système sonar 10. Ce faisceau atteint une mince bande 42 du fond marin, perpendiculaire à l'axe longitudinal x. En réponse à cette émission, la deuxième antenne 14 reçoit les ondes acoustiques qui ont été réfléchies par les éléments de ce bande 42, et les transducteurs 16 de la deuxième antenne 14 acquièrent les signaux de réception correspondant. Sur la base de ces signaux, l'unité de traitement 18 détermine notamment un premier temps de propagation $t_{M,1}$, mis par l'une de ces ondes pour se propager depuis le système sonar 11 jusqu'à un point M du fond situé à l'aplomb de ce système (en l'occurrence, cette onde acoustique se propage selon un trajet 41 vertical et rectiligne, avec une première constante de propagation $\alpha_{M,1}$ qui est donc nulle).

Le navire 1 se déplace ensuite, parallèlement à son axe longitudinal x, jusqu'à d'autres positions intermédiaires. En chacune de ces positions, le système sonar 11 détermine un temps de propagation $t_{M',1}$, $t_{M'',1}$, ... entre le système sonar 11 et un point M', M'', ... du fond situé à l'aplomb de ce système, comme expliqué ci-dessus pour la première position O1.

Le navire 1 se déplace ensuite jusqu'à une deuxième position O2. A cette deuxième position, la deuxième antenne 14 émet un faisceau longitudinal 50 d'ondes acoustiques qui se propage sous la forme d'une nappe peu épaisse dont le plan moyen est parallèle à l'axe longitudinal x (puisque la deuxième antenne 14 s'étend perpendiculairement à cet axe). Ce faisceau atteint ainsi une mince bande 52 du fond marin, qui cette fois est parallèle à l'axe longitudinal x (au lieu de lui être perpendiculaire). En réponse à cette émission, la première antenne 13 reçoit les ondes acoustiques qui ont été réfléchies par les éléments de cette bande 52, et les transducteurs 15 de la première antenne 13 acquièrent les signaux de réception correspondant. Sur la base de ces signaux, l'unité de traitement 18 détermine alors

- des deuxième temps de propagation $t_{M,2}$, $t_{M',2}$, $t_{M'',2}$, ... , mis par les différentes ondes acoustiques reçues, pour se propager depuis le système sonar 11 jusqu'aux points M, M', M'' du fond sondés grâce à l'émission de ce faisceau longitudinal 50 (points qui sont réparties le long de la ligne de mesure, parallèle à l'axe longitudinal x, mentionnée ci-dessus), et
- des deuxième constantes de propagation $\alpha_{M,2}$, $\alpha_{M',2}$, $\alpha_{M'',2}$, ..., qui sont les constantes de propagation de ces ondes acoustiques.

La profondeur de chaque point M, M', M'' situé le long de cette ligne de mesure est ainsi sondé :

- une première fois (depuis la deuxième position O1), au moyen d'une onde acoustique se propageant à la verticale, puis
- une deuxième fois (depuis la deuxième position O2), au moyen d'une onde acoustique dont la direction de propagation est inclinée par rapport à la verticale (lors de cette deuxième mesure, le trajet 51 suivi par l'onde acoustique qui sonde la position du point M est donc courbé par la réfraction, comme représenté sur la figure 10).

La profondeur de ce point est alors déterminée par l'unité de traitement 18 en comparant cette première mesure et cette deuxième mesure l'une avec l'autre.

Pour cela, l'unité de traitement 18 détermine tout d'abord la valeur de la célérité moyenne, $c_{moy}(z_M)$, à la profondeur $z_M$ du point M considéré, en fonction du premier temps de propagation $t_{M,1}$, du deuxième temps de propagation $t_{M,2}$, et de la deuxième constante de propagation $\alpha_{M,2}$.

L'unité de traitement 18 détermine ensuite la profondeur $z_M$ du point M, sur la base de cette valeur de la célérité moyenne.

Plus précisément, l'unité de traitement 18 détermine la valeur de la célérité moyenne $c_{moy}(z_M)$ comme étant la valeur pour laquelle un écart quadratique $\varepsilon^2$ entre :

- une première estimation $z_{M,1}$ de la profondeur $z_M$, déterminée sur la base du premier temps de propagation $t_{M,1}$, et
- une deuxième estimation $z_{M,2}$ de la profondeur $z_M$, déterminée sur la base du deuxième temps de propagation $t_{M,2}$ et de la deuxième constante de propagation $\alpha_{M,2}$,

est minimum (ou tout au moins inférieur à un seuil, par exemple inférieur à 10 centimètres), chacune de ces deux estimations étant déterminée sur la base de cette même valeur de la célérité moyenne $c_{moy}(z_M)$. Ainsi :

$$c_{moy}(z_M) = \operatorname{argmin}_{c_m}(\varepsilon^2)$$

$$= \operatorname{argmin}_{c_m}\left(\left[z_{M,1}(t_{M,1}, c_m) - z_{M,2}(t_{M,2}, \alpha_{M,2}, c_m)\right]^2\right) \quad (F15).$$

La première estimation $z_{M,1}$ et la deuxième estimation $z_{M,2}$ sont déterminées chacune, sur la base du modèle monocouche présenté plus haut, conformément aux formules F2 et F6, ou conformément à la formule F7, soit :

$$z_{M,1} = c_m . t_{M,1} \text{ et } z_{M,2} = c_m . t_{M,2} . \sqrt{1 - \left( \alpha_{M,2} . c_m \right)^2} .$$

Dans le mode de réalisation particulier du deuxième procédé qui est décrit ici, la minimisation de l'écart quadratique $\varepsilon^2$ (qui revient ici à annuler cet écart) conduit alors à déterminer la célérité moyenne $c_{moy}(z_M)$ au point M conformément à la formule F16 suivante :

$$c_{moy}(z_M) = \frac{1}{\alpha_{M,2}} . \sqrt{1 - \left( \frac{t_{M,1}}{t_{M,2}} \right)^2} \quad \text{(F16)}.$$

L'unité de traitement 18 peut par exemple déterminer la célérité moyenne $c_{moy}(z_M)$ conformément à la formule F16, ou par une recherche numérique de la valeur de $c_m$ qui minimise l'écart quadratique $\varepsilon^2$ (conformément à la formule F15).

Il est noté que, dans ce procédé, parmi les différents couples de données $(\alpha_{M,2}, t_{M,2})$, $(\alpha_{M',2}, t_{M',2})$, $(\alpha_{M'',2}, t_{M'',2})$, ..., associés respectivement aux différentes ondes reçues par la première antenne 13 depuis la deuxième position O2, il faut identifier celui, $(\alpha_{M,2}, t_{M,2})$, correspondant à l'onde acoustique qui a été réfléchie *par le même point* M que celui sondé depuis la première position O1 (puisque cette méthode est basée sur la comparaison de deux estimations distinctes de la profondeur *d'un même point*). Pour cela, l'unité de traitement 18 peut par exemple sélectionner celui de ces couples de données pour lequel un écart latéral $x_M$, déterminé en fonction du couple de données (a, t) considéré (par exemple selon la formule $x_M = c_{moy}^2 . t . \alpha$ ), est le plus proche de la distance séparant la première position O1 de la deuxième position O2 (distance qui est connue par ailleurs, par exemple grâce à un système de localisation 2, tel qu'un système de type GPS ou un loch équipant le navire 1).

La figure 11 représente schématiquement la valeur de l'écart $\varepsilon$ entre les deux estimations de profondeur $z_{M,1}$ et $z_{M,2}$ (exprimé en mètre), en fonction de la variable à ajuster $c_m$ (en mètres par seconde), dans une situation où le fond marin est plat, situé à une profondeur de 200 mètres. Les valeurs des premier et deuxième temps de propagation et de la deuxième constante de propagation, dont sont issues ces estimations de profondeurs $z_{M,1}$ et $z_{M,2}$, sont obtenues ici par simulation numérique, comme expliqué plus haut à propos de la figure 8.

Comme on peut le voir sur cette figure, dans cette situation, la plus petite valeur de l'écart $\varepsilon$ est obtenue pour $c_m$ = 1510,8 mètres par seconde. Or, dans le milieu aquatique E considéré, la valeur de la célérité moyenne $c_{moy}$, à une profondeur de 200 mètres, est de 1510,7 mètres par seconde. Cela montre que cette méthode permet effectivement, par comparaison de plusieurs mesures bathymétriques, de déterminer une valeur de la célérité moyenne extrêmement proche de la valeur réelle de cette célérité moyenne dans le milieu E sondé.

La figure 12 montre d'ailleurs plusieurs valeurs de la célérité moyenne $c_{moy}$ déterminées à partir des relevés bathymétriques eux-mêmes (ces valeurs, exprimées en mètres par seconde, sont reportées sur ce graphique sous la forme d'étoiles), pour différentes profondeurs z (exprimées en mètres) comprises entre 10 et 150 mètres, et, pour les mêmes profondeurs, des valeurs de référence de la célérité moyenne, $c_{moy,ref}$ (représentées sous la forme d'une ligne continue). Les valeurs de la célérité moyenne, issues des relevés bathymétriques eux-mêmes, sont déterminées à partir de temps de propagation obtenus comme précédemment par simulation numérique, dans une situation où la profondeur du fond marin varie progressivement, de 10 mètres jusqu'à 150 mètres, sur une longueur de 3 kilomètres. Cette figure montre à nouveau que les valeurs de célérité moyenne déduites des relevés bathymétriques sont très proches de valeurs de référence de cette célérité (ces valeurs de référence $c_{moy,ref}$ étant obtenues par intégration d'un profil de référence de la vitesse de propagation locale $c_{ref}(z)$).

Le deuxième procédé permet donc d'obtenir en temps réel des mesures bathymétriques et une estimation de la valeur de la célérité moyenne pour chaque profondeur mesurée. A partir des valeurs de célérité moyenne obtenues pour différentes profondeurs, on obtient ainsi un profil de célérité moyenne.

On peut prévoir en outre, au cours de ce deuxième procédé, que l'unité de traitement 18, détermine un profil de vitesse de propagation locale des ondes acoustiques, c(z), à partir du profil de célérité moyenne $c_{moy}(z)$ déterminé comme expliqué ci-dessus (c'est-à-dire à partir de plusieurs relevés bathymétriques comparés les uns aux autres).

Pour cela, la vitesse de propagation locale c(z), à la profondeur z, peut par exemple être déterminée conformément à la formule d'inversion F17 suivante (déduite de la formule F5) :

$$c(z) = \frac{c_{moy}^2(z)}{c_{moy}(z) - z.\ dc_{moy}(z)/dz} \qquad \text{(F17)}$$

La figure 13 représente schématiquement un profil de vitesse de propagation locale c(z) (exprimée en mètres par seconde), déterminé de cette manière, pour différentes profondeurs z (exprimées en mètres) comprises entre 10 et 150 mètres. Pour ces mêmes profondeurs, cette figure représente aussi un profil de référence de la vitesse de propagation locale $c_{ref}(z)$ (ce profil de référence rassemble les valeurs de la vitesse de propagation locale, telles qu'elles auraient été mesurées par une sonde placée successivement à différentes profondeurs, par exemple ; ce profil n'est connu ici que pour quelques profondeurs réparties dans la gamme allant de 10 à 150 mètres, et présente donc une allure de ligne brisée, avec une dérivée constante par morceaux). Ces deux profils sont très proches l'un de l'autre (l'écart relatif entre ces deux profils reste inférieur à 0,5 pour mille), ce qui montre que cette méthode de détermination du profil de vitesse de propagation locale c(z), par comparaison de mesures bathymétriques, conduit à des résultats fiables et précis.

On obtient ainsi, en temps réel, en même temps que les relevés bathymétriques eux-mêmes, le profil de vitesse de propagation locale c(z).

Il est noté toutefois que dans la formule 17, la dérivée $dc_{moy}(z)/dz$ présente au dénominateur peut avoir pour effet d'amplifier de légers bruits ou erreurs numériques affectant éventuellement le profil de la célérité moyenne $c_{moy}(z)$.

Pour y remédier, l'unité de traitement 18 peut, par exemple, mettre en œuvre une procédure de régularisation telle que celles décrites ci-dessous.

Par exemple, en supposant une vitesse de propagation locale constante dans l'intervalle $[z_1, z_2]$, notée c, les mesures de la célérité moyenne $c_{moy}(z_1)$ en $z_1$, et $c_{moy}(z_2)$ en $z_2$ donnent :

$$\frac{1}{c} = \frac{1}{z_2 - z_1}\left(\frac{z_2}{C_{moy}(z_2)} - \frac{z_1}{C_{moy}(z_1)}\right).$$

Plus généralement, on peut supposer que le profil de vitesse de propagation locale c(z) varie linéairement sur l'intervalle de profondeurs $[z_1, z_2]$ considéré : $c(z) = c_1 + g(z - z_1)$, pour $z \in [z_1, z_2]$.

Les valeurs des deux variables c1 et g, qui caractérisent ce profil de vitesse, sont alors déterminées par l'unité de traitement comme étant les valeurs minimisant la fonction coût FC suivante :

$$FC = \sum_i \left|\left(\frac{z_i}{c_{moy}(z_i)} - \frac{z_1}{c_{moy}(z_1)}\right) - \frac{1}{g}\log\left(\frac{c_1 + g(z_i - z_1)}{c_1}\right)\right|$$

où la somme $\Sigma_i$ porte sur les différentes profondeurs $z_i$ de l'intervalle $[z_1, z_2]$ pour lesquelles la célérité moyenne $c_{moy}(z_i)$ a été déterminée.

Différentes variantes peuvent être apportées au deuxième procédé qui vient d'être décrit.

Tout d'abord, la mesure du premier temps de propagation $t_{M,1}$ pourrait être réalisée au moyen d'une onde dont la direction de propagation soit inclinée par rapport à la verticale (au lieu de se propager verticalement, comme c'est le cas dans l'exemple de réalisation décrit ci-dessus). Dans ce dernier cas, la valeur de la célérité moyenne $c_{moy}(z_M)$ au point M est déterminée en tenant compte d'une première constante de propagation $\alpha_{M,1}$, avec laquelle cette première onde se propage, en plus de prendre en compte les premier et deuxième temps de propagation $t_{M,1}$, $t_{M,2}$ et la deuxième constante de propagation $\alpha_{M,2}$. Dans le cadre de cette variante, la première estimation $z_{M,1}$ de la profondeur $z_M$ est par exemple déterminée comme étant égale à $z_{M,1} = c_m . t_{M,1} . \sqrt{1 - \left(\alpha_{M,1} . c_m\right)^2}$ (au lieu d'être déterminée en fonction de $c_m$ et $t_{M,1}$ seulement). Pour ce qui est de la valeur de la célérité moyenne $c_{moy}(z_M)$, elle est déterminée, là encore, de manière à minimiser l'écart quadratique $\varepsilon^2$ (ou tout au moins de manière à le rendre inférieur à un seuil donné).

En variante encore, on pourrait prévoir, dans ce deuxième procédé, de mesurer des temps de propagation $t_{M,i}$ entre le système sonar et un même point M du fond marin, pour plus de deux positions distinctes du système sonar. Pour chacune de ces positions, $O_i$, le système sonar détermine alors la constante de propagation $\alpha_{M,i}$ de l'onde sonore ayant sondé la profondeur du point M, en plus du temps de propagation $t_{M,i}$ précité.

La valeur de la célérité moyenne $c_{moy}(z_M)$ au point M est alors déterminée par l'unité de traitement 18 comme étant la valeur pour laquelle un écart global ε', représentatif de la dispersion d'un ensemble d'estimations $z_{M,i}$ de la profondeur $z_M$, déterminées chacune sur la base de l'un des couples $(\alpha_{M,i}, t_{M,i})$ mesuré depuis l'une desdites positions $O_i$, est minimal (ou inférieur au seuil précité).

L'écart global ε' peut par exemple être égal à l'écart-type ou à la variance de cet ensemble d'estimations, ou à la somme des écarts quadratiques entre ces estimations prises deux par deux. Chacune de ces estimations est déterminée, comme précédemment, sur la base du modèle monocouche décrit plus haut (et donc, par exemple, conformément à la formule F7).

A titre d'exemple, si trois mesures de temps de propagation $t_{M,1}$, $t_{M,2}$, $t_{M,3}$ sont réalisées pour repérer le point M, pour trois positions distinctes du système sonar, cet écart global ε' peut être défini comme suit :

$$\varepsilon' = \left[ z_{M,1}\left(t_{M,1},\ \alpha_{M,1}, c_m\right) - z_{M,2}\left(t_{M,2},\ \alpha_{M,2}, c_m\right) \right]^2 + \left[ z_{M,2}\left(t_{M,2},\ \alpha_{M,2}, c_m\right) - \right.$$

$$\left. z_{M,3}\left(t_{M,3},\ \alpha_{M,3}, c_m\right) \right]^2 + \left[ z_{M,3}\left(t_{M,3},\ \alpha_{M,3}, c_m\right) - z_{M,1}\left(t_{M,1},\ \alpha_{M,1}, c_m\right) \right]^2.$$

Troisième procédé : détermination de la position d'une balise immergée

Dans ce troisième procédé, un émetteur 4 d'une balise 3 immergée émet une onde acoustique, qui est ensuite reçue par le système sonar 10 (figures 14 et 15).

L'unité de traitement 18 du système sonar 10 détermine alors une position de cette balise 3, par rapport au système sonar 10, sur la base :

- de la constante de propagation α de cette onde, mesurée lors de sa réception par le système sonar, et, selon le mode de réalisation considéré, sur la base en outre
- d'un temps de propagation $t_B$, mis par cette onde pour se propager depuis cet émetteur 4 jusqu'au système sonar 10.

Il est noté que l'onde acoustique en question effectue ici un trajet en aller simple, alors que les ondes acoustiques émises lors des premier et deuxième procédés effectuent des trajets aller puis retour (à la manière d'un écho). Le temps de propagation $t_B$ est donc égal à la durée séparant l'instant d'émission de cette onde, et l'instant de réception de cette onde (au lieu d'être égal à la moitié d'une telle durée).

Quoiqu'il en soit, la position de cette balise 3 est déterminée là encore sur la base du modèle de propagation monocouche qui a été présenté plus haut, en fonction du profil de la célérité moyenne $c_{moy}(z)$. Dans ce troisième procédé, ce profil est préenregistré dans la mémoire de l'unité de traitement 18.

D'autre part, dans ce troisième procédé, les première et deuxième antennes 13 et 14 sont employées toutes deux en réception.

Le chemin 61 suivi par l'onde acoustique émise, entre la balise 3 et le système sonar 10, est situé dans un plan de propagation PI vertical qui passe par le centre B de l'émetteur 4 et par le centre O de la tête sonar 11.

La direction de propagation de l'onde acoustique, au point O de réception de cette onde, est repéré par :

- son angle de réception $\theta_O$, formé, dans le plan de propagation PI, entre cette direction de propagation et la verticale z, et par
- un angle de pointé φ, formé entre le plan de propagation PI et le plan (z,x) (plan vertical parallèle à l'axe longitudinal x).

La constante de propagation α de l'onde acoustique est, comme précédemment, égale au sinus de l'angle de réception $\theta_O$, divisé par la vitesse de propagation locale $c_O$ des ondes acoustiques à la profondeur des antennes réceptrices, 13 et 14. L'unité de traitement 18 est programmée pour déterminer notamment la constante de propagation α, sur la base des signaux de réception captés par les transducteurs 15, 16 de la première antenne 13 et de la deuxième antenne 14 lors de la réception de cette onde acoustique.

En l'occurrence, le décalage temporel $\Delta t_x$ entre deux signaux de réception délivrés par deux transducteurs 15 de la première antenne 13 distants de $d_x$ est donné par $\Delta t_x = d_x.\alpha.cos(\varphi)$. De manière comparable, le décalage temporel $\Delta t_y$ entre deux signaux de réception délivrés par deux transducteurs 16 de la deuxième antenne 14 distants de $d_y$ est donné par $\Delta t_y = d_y.\alpha.\sin(\varphi)$. La constante de propagation α de l'onde acoustique reçue, et les quantités $\alpha.\cos(\varphi)$ et $\alpha.\sin(\varphi)$ peuvent alors être obtenues sur la base de ces décalages temporels. La constante de propagation est déterminée par exemple en calculant la quantité $\sqrt{(\Delta t_x/d_x)^2 + \left(\Delta t_y/d_y\right)^2}$.

Dans un premier mode de réalisation de ce troisième procédé, l'unité de traitement 18 détermine la position du centre B de l'émetteur 4, par rapport au système sonar, sur la base à la fois de la constante de propagation $\alpha$, et du temps de propagation $t_B$.

Ce premier mode de réalisation est adapté à une situation dans laquelle la balise 3 et le système sonar 10 partagent une même référence temporelle commune, ce qui permet à l'unité de traitement 18 de déterminer le temps de propagation $t_B$ (le système sonar et la balise disposant par exemple chacun d'une d'horloge, ces deux horloges étant synchronisée précisément entre elles).

Dans ce premier mode de réalisation, l'unité de traitement 18 détermine des coordonnées $x_B$, $y_B$, $z_B$, qui repèrent la balise 3 dans le référentiel x,y,z lié au système sonar 10, comme suit.

Dans un premier temps, la profondeur $z_B$, et la célérité moyenne correspondante est déterminée en résolvant l'équation suivante :

$$z_B = c_{moy}(z_B).t_B.\sqrt{1 - \left(\alpha.c_{moy}(z_B)\right)^2} \; .$$

Puis les coordonnées « horizontales » $x_B$, $y_B$, sont déterminées conformément aux formules suivantes :

$$x_B = c^2_{moy}(z_B).t_B.\alpha.\cos(\varphi) \; \text{et} \; y_B = c^2_{moy}(z_B).t_B.\alpha.\sin(\varphi).$$

L'unité de traitement 18 peut en outre être programmée pour déterminer une position de la balise 3 dans un référentiel dans lequel la balise est fixe, tel que le référentiel terrestre $X_T$, $Y_T$, $Z_T$. Pour cela, l'unité de traitement 18 acquiert une position du navire 1, repérée dans le référentiel terrestre, au moyen du système de localisation 2 équipant ce navire, le navire 1 étant situé à la même position que lors de la réception de d'onde acoustique émise par la balise 3. La position de la balise 3 est déterminée ensuite en fonction de la position du navire 1 dans le référentiel terrestre, et de la position $(x_B,y_B,z_B)$ de la balise par rapport au système sonar 10.

Dans un deuxième mode de réalisation de ce troisième procédé, l'unité de traitement 18 détermine la position latérale $(x_B,y_B)$ du centre B de l'émetteur 4, par rapport au système sonar 10, sur la base de la constante de propagation $\alpha$ de l'onde acoustique reçue, et d'une profondeur $z'_B$ de la balise connue au préalable.

Cette profondeur $z'_B$ est connue de l'unité de traitement 18 par exemple parce que des données représentatives de cette profondeur ont été transmises de la balise 3 au système sonar 10 par l'intermédiaire de l'onde acoustique émise par la balise.

Ce deuxième mode de réalisation permet avantageusement de déterminer la position de la balise 3, même si le système sonar 10 et cette balise 3 ne partagent pas de référence temporelle commune.

Les coordonnées $x_B$, $y_B$, qui repèrent la position latérale du centre B de l'émetteur 4, dans le plan horizontal (x,y), sont déterminées chacune en fonction du produit de :

- la différence entre la profondeur de l'émetteur 4, $z'_B$, et la profondeur de la tête sonar, ici considérée comme nulle, et de
- la tangente de l'angle de propagation moyen $\theta_{moy}$, qui a été défini plus haut (lors de la description du premier procédé).

La tangente $\tan(\theta_{moy})$ de cet angle de propagation moyen $\theta_{moy}$ est déterminée en fonction de la constante de propagation $\alpha$ de l'onde reçue et de la célérité moyenne $c_{moy}(z'_B)$ à la profondeur $z'_B$ de l'émetteur 4 :

$$\tan(\theta_{moy}) = c_{moy}(z'_B).\alpha/\sqrt{1 - \left(c_{moy}(z'_B).\alpha\right)^2}$$

Dans ce deuxième mode de réalisation, l'unité de traitement 18 détermine alors les coordonnées $x_B$, $y_B$ conformément aux formules suivantes, par exemple :

$$x_B = z'_B.c_{moy}(z'_B).\alpha/\sqrt{1 - \left(c_{moy}(z'_B).\alpha\right)^2}.\cos(\varphi)$$

$$y_B = z'_B . c_{moy}(z'_B) . \alpha / \sqrt{1 - \left(c_{moy}(z'_B) . \alpha\right)^2} . \sin(\varphi).$$

En variante, la tangente de l'angle de propagation moyen $\theta_{moy}$ pourrait toutefois être déterminée en fonction de la célérité arithmétique moyenne $\bar{c}(z'_B)$, au lieu d'être déterminée en fonction de la célérité (harmonique) moyenne $c_{moy}(z'_B)$. Dans ce cas, la tangente de l'angle de propagation moyen $\theta_{moy}$ est déterminée conformément à la formule suivante :

$$\tan(\theta_{moy}) = \bar{c}(z'_B) . \alpha / \sqrt{1 - (\bar{c}(z'_B) . \alpha)^2}.$$

Par ailleurs, comme dans le premier mode de réalisation, l'unité de traitement 18 peut en outre être programmée pour déterminer une position de la balise 3 dans un référentiel dans lequel la balise est fixe, tel que le référentiel terrestre $X_T$, $Y_T$, $Z_T$.

Il est noté que ce troisième procédé est appliqué ici à la localisation d'une balise immergée, mais qu'il peut aussi s'appliquer à la détermination de la position d'un autre système émergé émettant des ondes acoustiques, tel qu'un sous-marin distinct du navire 1 précité, par exemple, et cela quel soit le mode de réalisation considéré.

Différentes variantes peuvent être apportées aux procédés et au système sonar qui ont été décrits ci-dessus.

Tout d'abord, le système sonar pourrait équiper un navire submersible, au lieu d'un navire de surface, que ce navire soit autonome ou qu'il accueille un équipage.

Dans ce cas, ce n'est pas directement la profondeur d'un point du fond marin, ou la profondeur de l'émetteur de la balise à localiser qui est déterminée, mais une différence $\Delta z = z_P - z_o$ entre la profondeur $z_P$ de ce point du fond (ou de cet émetteur) et la profondeur $z_o$ de l'antenne réceptrice du système sonar 10.

Les premier, deuxième et troisième procédés sont alors exécutés par les unités de pilotage 17 et de traitement 18 de manière complètement analogue à ce qui a été décrit plus haut, mais en déterminant la célérité moyenne $c_{moy}(z_P)$ conformément à la formule suivante :

$$\frac{1}{c_{moy}(z_P)} = \frac{1}{(z_P - z_o)} \int_{z_o}^{z_P} \frac{1}{c(z)} dz \qquad \text{(F5')}$$

et, de manière optionnelle, en déterminant la célérité arithmétique moyenne conformément à la formule suivante :

$$\bar{c}(z_P) = \frac{1}{(z_P - z_o)} \int_{z_o}^{z_P} c(z) \, dz \qquad \text{(F4')}$$

D'autre part, le modèle monocouche employé pour déterminer la position du point sondé ou de la balise émettrice pourrait être paramétré de manière légèrement différente de ce qui a été présenté ci-dessus. Ainsi, à titre d'exemple, l'angle de propagation moyen $\theta_{moy}$ pourrait présenter un léger écart relatif par rapport au cas (optimal) présenté ci-dessus, pour lequel $\sin(\theta_{moy}) = \alpha . c_{moy}(z_P)$, (ou, en variante, pour lequel $\sin(\theta_{moy}) = \alpha . \bar{c}(z_P)$). Il est toutefois préférable que cet écart relatif reste inférieur à un pour mille (soit 0,001), car cela permet de conserver, pour les profondeurs et écarts latéraux déterminés par l'unité de traitement, des précisions élevées, comparables à ce qui a été présenté plus haut.

Par ailleurs, comme déjà indiqué, le système sonar pourrait présenter une structure plus simple : il pourrait par exemple comporter, au lieu de deux antennes linéaires multi-capteurs complètes dont les récepteurs (par exemple au nombre de quatre au moins) sont espacés de $\lambda/2$ (où $\lambda$ est la longueur d'onde moyenne des onde acoustiques émises), disposées "en croix de Mills", un système de réception lacunaire (dont les récepteurs sont espacés de plus que $\lambda/2$) composé à minima de 3 récepteurs non alignés. Dans ce cas, l'ambiguïté angulaire peut être résolue (c'est-à-dire levée), à titre d'exemple, en émettant des signaux larges bandes (dont le contenu spectral s'étend sur une bande de fréquences large).

En variante encore, les unités de commande, de pilotage et de traitement pourraient être réalisées sous la forme d'une même unité électronique, ou, au contraire, être subdivisées en plus de modules que ce qui a été décrit ci-dessus.

**Revendications**

1. Procédé de détermination d'une différence de profondeur ($z_P$, $\Delta_Z$ ; $z_{M,1}$, $z_{M,2}$, $z_M$ ; $z_B$), ou d'un écart latéral ($y_P$ ; $x_M$ ; $x_B$, $y_B$) par rapport à la verticale, entre deux points d'un milieu subaquatique (E), le procédé comprenant les étapes suivantes :

   - émission d'une onde acoustique dans le milieu subaquatique (E) au moyen d'au moins un émetteur (15 ; 15, 16 ; 4),
   - réception de ladite onde acoustique au moyen d'une antenne réceptrice (14 ; 14, 13) comprenant plusieurs récepteurs (16 ; 16, 15), ces récepteurs délivrant une pluralité respective de signaux de réception (s) lors de la réception de ladite onde acoustique,
   - détermination d'une constante de propagation ($\alpha$ ; $\alpha_{M,1}$, $\alpha_{M,2}$) de l'onde acoustique reçue, en fonction desdits signaux de réception ($\underline{s}$), ladite constante de propagation étant égale au sinus d'un angle de réception ($\theta_o$) repérant la direction de réception de l'onde acoustique par rapport à la verticale, divisé par une vitesse de propagation locale ($c_o$) des ondes acoustiques à la profondeur de ladite antenne réceptrice,
   - détermination d'un temps de propagation (t ; $t_{M,1}$, $t_{M,2}$ ; $t_B$) de l'onde acoustique, en fonction d'une durée séparant les instants d'émission et de réception de l'onde acoustique, et
   - détermination de la différence de profondeurs ($z_P$, $\Delta z$ ; $\Delta_{M,1}$, $z_{M,2}$, $z_M$ ; $z_B$) ou de l'écart latéral ($y_P$ ; $x_M$ ; $x_B$, $y_B$) par rapport à la verticale, entre l'antenne réceptrice (13, 14) et l'émetteur (4), ou entre l'antenne réceptrice (14; 14, 13) et un élément immergé (P ; M) réfléchissant ladite onde acoustique lors de sa propagation depuis l'émetteur (15 ; 15, 16) jusqu'à l'antenne réceptrice (14 ; 14, 13),
   **caractérisé en ce que** la détermination de la différence de profondeurs ($z_P$, $\Delta z$; $\Delta_{M,1}$, $z_{M,2}$, $z_M$ ; $z_B$) ou de l'écart latéral ($y_P$ ; $x_M$ ; $x_B$, $y_B$) par rapport à la verticale est en fonction :

   - d'un produit dudit temps de propagation (t ; $t_{M,1}$, $t_{M,2}$ ; $t_B$) par une valeur de célérité moyenne ($c_{moy}(z_P)$, $c_{moy}(z_M)$) de l'onde acoustique à une profondeur ($z_P$, $z_M$) de l'émetteur (4) ou à une profondeur ($z_B$, $z'_B$) de l'élément immergé (P; M), ladite valeur de célérité moyenne ($c_{moy}(z_P)$, $c_{moy}(z_M)$) étant représentative d'une moyenne harmonique d'une pluralité de vitesses de propagation locales (c), présentées par les ondes acoustiques à une pluralité respective de profondeurs (z) allant de la profondeur de l'émetteur (4) jusqu'à une profondeur de l'antenne réceptrice (13, 14), ou de la profondeur dudit élément immergé (P ; M) jusqu'à la profondeur de l'antenne réceptrice (14 ; 14, 13)

   et en fonction

   - d'un angle de propagation moyen ($\theta_{moy}$), défini entre la verticale et une direction de propagation effective de l'onde acoustique, l'angle de propagation moyen ($\theta_{moy}$) étant déterminé en fonction de ladite constante de propagation ($\alpha$ ; $\alpha_{M,1}$, $\alpha_{M,2}$) et de ladite valeur de célérité moyenne ($c_{moy}(z_P)$, $c_{moy}(z_M)$) de l'onde acoustique à la profondeur ($z_P$, $z_M$) de l'émetteur (4) ou à la profondeur ($z_B$, $z'_B$) de l'élément immergé (P ; M).

2. Procédé selon la revendication 1, dans lequel il est prévu de déterminer à la fois ladite différence de profondeur ($z_P$, $\Delta z$ ; $z_{M,1}$, $z_{M,2}$, $z_M$ ; $z_B$) et ledit écart latéral ($y_P$ ; $x_M$ ; $x_B$, $y_B$) par rapport à la verticale.

3. Procédé selon la revendication 1 ou 2, dans lequel ladite valeur de célérité moyenne ($c_{moy}(z_P)$, $c_{moy}(z_M)$) est déterminée à partir d'un profil de célérité moyenne ($c_{moy}(z)$), le profil de célérité moyenne ($c_{moy(z)}$) étant déterminé par intégration numérique d'un profil de vitesse de propagation locale relevé précédemment entre la profondeur de l'émetteur (4) et la profondeur de l'antenne réceptrice (13, 14), ou entre la profondeur dudit élément immergé (P ; M) et la profondeur de l'antenne réceptrice (14 ; 14, 13).

4. Procédé selon la revendication 1 ou 2, comprenant un déplacement de l'antenne réceptrice parallèlement à son axe longitudinal d'une première position (O1) à une deuxième position (02), et comprenant la détermination d'un premier temps de propagation d'une première onde acoustique pour la première position (O1) et d'une première constante de propagation ($\alpha$ ; $\alpha_{M,1}$, $\alpha_{M,2}$) de l'onde acoustique reçue et, respectivement, d'un deuxième temps de propagation d'une deuxième onde acoustique pour la deuxième position (02) et d'une deuxième constante de propagation ($\alpha_{M,2}$) et dans lequel ladite valeur de célérité moyenne ($c_{moy}(z_P)$, $c_{moy}(z_M)$) est déterminée en fonction du premier temps de propagation, du deuxième temps de propagation et de la deuxième constante de propagation ($\alpha_{M,2}$).

5. Procédé selon la revendication 4, comprenant la détermination d'un profil de célérité moyenne ($c_{moy}(z)$) pour une pluralité de profondeurs (z) comprises entre la profondeur de l'émetteur (4) et la profondeur de l'antenne réceptrice (13, 14), ou entre la profondeur dudit élément immergé (P ; M) et la profondeur de l'antenne réceptrice (14 ; 14, 13), et estimation d'un profil de vitesse de propagation locale par une méthode numérique d'inversion à partir du profil de célérité moyenne ($c_{moy(z)}$).

6. Procédé selon l'une des revendications 1 à 5, dans lequel ladite différence de profondeur ($z_P$, $\Delta z$ ; $Z_{M,1}$, $z_{M,2}$, $z_M$ ; $z_B$) est déterminée, de manière à présenter un écart relatif inférieur à un pour mille par rapport :

- au produit dudit temps de propagation (t ; $t_{M,1}$, $t_{M,2}$ ; $t_B$) par ladite valeur de célérité moyenne ($c_{moy}(z_P)$, $c_{moy}(z_M)$),
- multiplié par le cosinus dudit angle de propagation moyen ($\theta_{moy}$).

7. Procédé selon l'une des revendications 1 à 6, dans lequel ledit écart latéral est déterminé, de manière à présenter un écart relatif inférieur à un pour mille par rapport :

- au produit dudit temps de propagation (t ; $t_{M,1}$, $t_{M,2}$ ; $t_B$) par ladite valeur de célérité moyenne ($c_{moy}(z_P)$, $c_{moy}(z_M)$),
- multiplié par le sinus dudit angle de propagation moyen ($\theta_{moy}$).

8. Procédé selon l'une des revendications 1 à 7, dans lequel l'angle de propagation moyen ($\theta_{moy}$) est déterminé de sorte que son sinus présente un écart relatif inférieur à un pour mille par rapport au produit de ladite constante de propagation ($\alpha$; $\alpha_{M,1}$, $\alpha_{M,2}$) par ladite valeur de célérité moyenne ($c_{moy(z_P)}$, $c_{moy(z_M)}$).

9. Procédé selon l'une des revendications 1 à 8, dans lequel l'angle de propagation moyen ($\theta_{moy}$) est déterminé en fonction en outre d'une célérité arithmétique moyenne ($\overline{c}$) qui est représentative d'une moyenne arithmétique d'une pluralité de vitesses de propagation locales (c), présentées par les ondes acoustiques à une pluralité respective de profondeurs (z) allant de la profondeur de l'émetteur (4) jusqu'à la profondeur de l'antenne réceptrice (13, 14), ou de la profondeur dudit élément immergé (P ; M) jusqu'à la profondeur de l'antenne réceptrice (14 ; 14, 13).

10. Procédé selon la revendication 9, dans lequel l'angle de propagation moyen ($\theta_{moy}$) est déterminé de sorte que son sinus présente un écart relatif inférieur à un point mille par rapport à ladite constante de propagation (a) multipliée par ladite célérité arithmétique moyenne ($\overline{c}$).

11. Procédé selon l'une des revendications 1 à 10, dans lequel l'émetteur (15 ; 15, 16) et l'antenne réceptrice (14; 14, 13) équipent un même système sonar (10), et au cours duquel ce système sonar (10) détermine la différence de profondeurs ($z_P$, $\Delta z$ ; $z_{M,1}$, $z_{M,2}$, $z_M$) ou l'écart latéral ($y_P$ ; $x_M$) par rapport à la verticale entre l'antenne réceptrice et un élément immergé (P ; M) réfléchissant ladite onde acoustique lors de sa propagation depuis l'émetteur (15 ; 15, 16) jusqu'à l'antenne réceptrice (14 ; 14, 13).

12. Procédé selon l'une des revendications 1 à 10, dans lequel l'émetteur (4) et l'antenne réceptrice (13, 14) équipent respectivement deux systèmes distincts (3, 10) situés à des profondeurs respectives différentes ($z_B$, $z_o$), et au cours duquel le système (10) muni de l'antenne réceptrice (13, 14) détermine la différence de profondeurs ($z_B$) ou l'écart latéral ($x_B$, $y_B$) par rapport à la verticale entre l'antenne réceptrice (13, 14) et ledit émetteur (4).

13. Procédé selon la revendication 3, comprenant en outre les étapes suivantes :

- détermination, au moyen d'une sonde positionnée successivement à plusieurs profondeurs (z) différentes, d'une pluralité de vitesses de propagation locales (c) présentées respectivement, à chacune desdites profondeurs (z), par les ondes acoustiques, puis
- détermination du profil de célérité moyenne en fonction de ladite pluralité de vitesses de propagation locales (c) déterminées précédemment.

14. Procédé selon la revendication 4, dans lequel ladite valeur de célérité moyenne ($c_{moy}(z)$) est déterminée de manière à ce qu'un écart entre

- ladite différence de profondeur ($z_{M,1}$), et
- une deuxième différence de profondeur ($z_{M,2}$) entre l'antenne réceptrice (14) et l'élément immergé (M)
soit inférieur à un seuil donné, ladite deuxième différence de profondeur ($z_{M,2}$) étant déterminée en fonction :

- d'un produit dudit deuxième temps de propagation ($t_{M,2}$) par ladite valeur de célérité moyenne ($c_{moy}$), et en fonction
- d'un deuxième angle de propagation moyen, défini entre la verticale et une direction de propagation effective de ladite deuxième onde acoustique, ledit deuxième angle de propagation moyen étant déterminé en fonction de ladite deuxième constante de propagation ($\alpha_{M,2}$).

**15.** Procédé de détermination d'une vitesse de propagation locale (c) des ondes acoustiques dans un milieu subaquatique (E), comprenant les étapes suivantes :

- pour une pluralité d'éléments immergés (M, M', M") situés à des profondeurs ($z_M$, $z_M'$, $z_M"$) différentes, détermination d'une pluralité respective de valeurs de célérité moyenne ($c_{moy}(z_M)$, $c_{moy}(z_M')$, $c_{moy}(z_M")$), chacune desdites valeurs étant déterminée conformément au procédé défini par la revendication 14, puis
- détermination d'une pluralité de vitesses de propagation locales (c) des ondes acoustiques, pour une pluralité de profondeurs données dans l'intervalle de profondeur de la pluralité des éléments immergés et en particulier pour chaque profondeur ($z_M$, $z_M'$, $z_M"$) de chaque élément immergé de ladite pluralité d'éléments immergés en fonction de ladite pluralité de valeurs de célérité moyenne ($c_{moy}(z_M)$, $c_{moy}(z_M')$, $c_{moy}(z_M")$) déterminées précédemment, et
- détermination en chacun desdits éléments immergés, à partir de la pluralité de vitesses de propagation locales déterminée précédemment et des constantes de propagations associées, des angles d'incidence respectifs de l'onde acoustique.

**16.** Procédé de détermination d'une position ($x_B$, $y_B$) d'un émetteur (4) immergé dans un milieu subaquatique (E), comprenant les étapes suivantes :

- émission d'une onde acoustique dans le milieu subaquatique par ledit émetteur (4), dont la profondeur ($z_B$) est connue,
- réception de ladite onde acoustique au moyen d'une antenne réceptrice (13, 14) équipant un navire (1), de surface ou submersible, l'antenne réceptrice (13, 14) comprenant plusieurs récepteurs (15, 16) délivrant une pluralité respective de signaux de réception ($\underline{s}$),
- détermination d'une constante de propagation (a) de l'onde acoustique reçue, en fonction desdits signaux de réception ($\underline{s}$), ladite constante de propagation étant égale au sinus d'un angle de réception ($\theta_o$) repérant la direction de réception de l'onde acoustique par rapport à la verticale dans un plan vertical (PI) contenant l'émetteur (4) et l'antenne réceptrice (13, 14), divisé par une vitesse de propagation locale ($c_o$) des ondes acoustiques à la profondeur ($z_o$) de ladite antenne réceptrice,
- détermination d'une direction de propagation effective de l'onde acoustique en fonction du produit de ladite constante de propagation (a) et d'une valeur de célérité moyenne ($c_{moy}(z_B)$) de propagation à la profondeur ($z_B$) de l'émetteur (4) immergé, ladite valeur de célérité moyenne ($c_{moy}(z_B)$) étant représentative d'une moyenne harmonique d'une pluralité de vitesses de propagation locales (c), présentées par les ondes acoustiques à une pluralité respective de profondeurs (z) entre la profondeur ($z_B$) de l'émetteur et la profondeur ($z_o$) de l'antenne réceptrice, et
- détermination d'un écart latéral ($x_B$, $y_B$) par rapport à la verticale entre l'antenne réceptrice (13, 14) et l'émetteur (4), en fonction du produit de :
- la différence entre la profondeur ($z_B$) de l'émetteur et la profondeur ($z_o$) de l'antenne réceptrice, et de
- la tangente d'un angle de propagation moyen ($\theta_{moy}$) défini entre ladite direction de propagation effective et la verticale, l'angle de propagation moyen ($\theta_{moy}$) étant déterminé en fonction de ladite constante de propagation (a) et de ladite valeur de célérité moyenne ($c_{moy}(z_B)$) de l'onde acoustique à la profondeur ($z_B$) de l'émetteur (4).

**17.** Système sonar (10) comprenant :

- une antenne réceptrice (13, 14) configurée pour réceptionner une onde acoustique qui a été émise précédemment dans un milieu subaquatique par au moins un émetteur (15, 16, 4), l'antenne réceptrice (13, 14) comprenant plusieurs récepteurs (15, 16) aptes à délivrer une pluralité respective de signaux de réception ($\underline{s}$) lors de la réception de ladite onde acoustique, et
le système sonar (10) étant **caractérisé en ce qu'**il comprend une unité de traitement (18) électronique programmée pour :

- déterminer une constante de propagation ($\alpha$; $\alpha_{M,1}$, $\alpha_{M,2}$) de l'onde acoustique reçue, en fonction desdits signaux de réception ($\underline{s}$), ladite constante de propagation étant égale au sinus d'un angle de réception ($\theta_o$)

repérant la direction de réception de l'onde acoustique par rapport à la verticale, divisé par une vitesse de propagation locale ($c_o$) des ondes acoustiques à la profondeur de ladite antenne réceptrice,
- déterminer un temps de propagation (t ; $t_{M,1}$, $t_{M,2}$ ; $t_B$) de l'onde acoustique, en fonction d'une durée séparant les instants d'émission et de réception de l'onde acoustique, et pour

- déterminer une différence de profondeur ($z_P$, $\Delta z$ ; $z_{M,1}$, $z_{M,2}$, $z_M$ ; $z_B$) ou un écart latéral ($y_P$; $x_M$ ; $x_B$, $y_B$) par rapport à la verticale, entre l'antenne réceptrice (13, 14) et l'émetteur (4) ou entre l'antenne réceptrice (14; 14, 13) et un élément immergé (P; M) réfléchissant ladite onde acoustique lors de sa propagation depuis l'émetteur (15 ; 15, 16) jusqu'à l'antenne réceptrice (14 ; 14, 13), en fonction :

- d'un produit dudit temps de propagation (t ; $t_{M,1}$, $t_{M,2}$ ; $t_B$) par une valeur de célérité moyenne ($c_{moy}(z_P)$, $c_{moy}(z_M)$) de l'onde acoustique, ladite valeur de célérité moyenne ($c_{moy}(z_P)$, $c_{moy}(z_M)$) étant représentative d'une moyenne harmonique d'une pluralité de vitesses de propagation locales (c), présentées par les ondes acoustiques à une pluralité respective de profondeurs (z) allant de la profondeur de l'émetteur (4) jusqu'à une profondeur de l'antenne réceptrice (13, 14), ou de la profondeur dudit élément immergé (P ; M) jusqu'à la profondeur de l'antenne réceptrice (14 ; 14, 13), et en fonction
- d'un angle de propagation moyen ($\theta_{moy}$), défini entre la verticale et une direction de propagation effective de l'onde acoustique, l'angle de propagation moyen ($\theta_{moy}$) étant déterminé en fonction de ladite constante de propagation ($\alpha$ ; $\alpha_{M,1}$, $\alpha_{M,2}$) et de ladite valeur de célérité moyenne ($c_{moy}(z_P)$, $c_{moy}(z_M)$) de l'onde acoustique à la profondeur ($z_P$, $z_M$) de l'émetteur (4) ou à la profondeur ($z_B$, $z'_B$) de l'élément immergé (P ; M).

**18.** Système sonar (10) comprenant :

- une antenne réceptrice (13, 14) configurée pour réceptionner une onde acoustique qui a été émise précédemment dans un milieu subaquatique par un émetteur (4) dont la profondeur ($z_B$) est connue, l'antenne réceptrice (13, 14) comprenant plusieurs récepteurs (15, 16) aptes à délivrer une pluralité respective de signaux de réception (s) lors de la réception de ladite onde acoustique, et
le système sonar (10) étant **caractérisé en ce qu'**il comprend une unité de traitement (18) électronique programmée pour :

- déterminer une constante de propagation (a) de l'onde acoustique reçue, en fonction desdits signaux de réception ($\underline{s}$), ladite constante de propagation étant égale au sinus d'un angle de réception ($\theta_o$) repérant la direction de réception de l'onde acoustique par rapport à la verticale dans un plan vertical (PI) contenant l'émetteur (4) et l'antenne réceptrice (13,14), divisé par une vitesse de propagation locale ($c_o$) des ondes acoustiques à la profondeur ($z_o$) de ladite antenne réceptrice,
- déterminer une direction de propagation effective de l'onde acoustique reçue, en fonction du produit de ladite constante de propagation (a) et d'une valeur de célérité moyenne ($c_{moy}(z_B)$) de propagation à la profondeur ($z_B$) de l'émetteur, ladite valeur de célérité moyenne ($c_{moy}(z_B)$) étant représentative d'une moyenne harmonique d'une pluralité de vitesses de propagation locales (c), présentées par les ondes acoustiques à une pluralité respective de profondeurs (z) allant de la profondeur de l'émetteur (4) jusqu'à une profondeur de l'antenne réceptrice (13, 14),
- acquérir ou lire dans une mémoire une donnée représentative de la profondeur ($z_B$) de l'émetteur (4), et pour
- déterminer un écart latéral ($x_B$, $y_B$) par rapport à la verticale, entre l'antenne réceptrice (13, 14) et l'émetteur (4), en fonction du produit de :

- la différence entre la profondeur ($z_B$) de l'émetteur et la profondeur ($z_o$) de l'antenne réceptrice, et de
- la tangente d'un angle de propagation moyen ($\theta_{moy}$) défini entre ladite direction de propagation effective et la verticale, l'angle de propagation moyen ($\theta_{moy}$) étant déterminé en fonction de ladite constante de propagation (a) et de ladite valeur de célérité moyenne ($c_{moy}(z_B)$) de l'onde acoustique à la profondeur ($z_B$) de l'émetteur (4).

**Patentansprüche**

**1.** Verfahren zur Bestimmung einer Tiefendifferenz ($z_P$, $\Delta z$; $z_{M,1}$, $z_{M,2}$, $z_M$; $z_B$) oder einer seitlichen Abweichung (yp; $x_M$; $x_B$, $y_B$) von der Vertikalen zwischen zwei Punkten eines Unterwasserumfelds (E), wobei das Verfahren die folgenden Schritte aufweist:

- Aussendung einer Schallwelle in das Unterwasserumfeld (E) mittels mindestens eines Senders (15; 15, 16; 4),
- Empfang der Schallwelle mittels einer Empfangsantenne (14; 14, 13), die mehrere Empfänger (16; 16, 15) aufweist, wobei diese Empfänger beim Empfang der Schallwelle eine jeweilige Anzahl Empfangssignale ($\underline{s}$) abgeben,
- Bestimmung einer Ausbreitungskonstanten ($\alpha$; $\alpha_{M,1}$, $\alpha_{M,2}$) der empfangenen Schallwelle in Abhängigkeit von den Empfangssignalen ($\underline{s}$), wobei die Ausbreitungskonstante gleich dem Sinus eines Empfangswinkels ($\theta_0$) ist, der die Empfangsrichtung der Schallwelle gegenüber der Vertikalen, geteilt durch eine örtliche Ausbreitungsgeschwindigkeit ($c_0$) der Schallwellen in der Tiefe der Empfangsantenne, angibt,
- Bestimmung einer Ausbreitungszeit (t; $t_{M,1}$, $t_{M,2}$; $t_B$) der Schallwelle in Abhängigkeit von einer Dauer, die den Aussendungszeitpunkt vom Empfangszeitpunkt der Schallwelle trennt, und
- Bestimmung der Tiefendifferenz ($z_P$, $\Delta z$; $z_{M,1}$, $z_{M,2}$, $z_M$; $z_B$) oder der seitlichen Abweichung ($y_P$; $x_M$; $x_B$, $y_B$) von der Vertikalen zwischen der Empfangsantenne (13, 14) und dem Sender (4) oder zwischen der Empfangsantenne (14; 14, 13) und einem eingetauchten Element (P; M), das die Schallwelle bei deren Ausbreitung vom Sender (15; 15, 16) bis zur Empfangsantenne (14; 14, 13) reflektiert,

**dadurch gekennzeichnet, daß** die Bestimmung der Tiefendifferenz (zp, $\Delta z$; $z_{M,1}$, $z_{M,2}$, $z_M$; $z_B$) oder der seitlichen Abweichung ($y_P$; $x_M$; $x_B$, $y_B$) von der Vertikalen

- von einem Produkt aus der Ausbreitungszeit (t; $t_{M,1}$, $t_{M,2}$; $t_B$) und einem Wert für die mittlere Ausbreitungsgeschwindigkeit ($c_{moy}(z_P)$, $c_{moy}(z_M)$) der Schallwelle in einer Tiefe (zp, $z_M$) des Senders (4) oder in einer Tiefe ($z_B$, $z'_B$) des eingetauchten Elements (P; M) abhängt, wobei der Wert für die mittlere Ausbreitungsgeschwindigkeit ($c_{moy}(z_P)$, $c_{moy}(z_M)$) für einen harmonischen Mittelwert einer Anzahl lokaler Ausbreitungsgeschwindigkeiten (c) steht, die die Schallwellen bei einer jeweiligen Anzahl Tiefen (z), die von der Tiefe des Senders (4) bis zu einer Tiefe der Empfangsantenne (13, 14) oder von der Tiefe des eingetauchten Elements (P; M) bis zu einer Tiefe der Empfangsantenne (14; 14, 13) reichen, aufweisen, und
- von einem mittleren Ausbreitungswinkel ($\theta_{moy}$) abhängt, der zwischen der Vertikalen und einer effektiven Ausbreitungsrichtung der Schallwelle definiert ist, wobei der mittlere Ausbreitungswinkel ($\theta_{moy}$) in Abhängigkeit von der Ausbreitungskonstanten ($\alpha$; $\alpha_{M,1}$, $\alpha_{M,2}$) und dem Wert für die mittlere Ausbreitungsgeschwindigkeit ($c_{moy}(z_P)$, $c_{moy}(z_P)$) der Schallwelle in der Tiefe ($z_P$, $z_M$) des Eimpfängers (4) oder in der Tiefe ($z_B$, $z'_B$) des eingetauchten Elements (P; M) bestimmt wird.

2. Verfahren gemäß Anspruch 1, bei dem vorgesehen ist, sowohl die Tiefendifferenz ($z_P$, $\Delta z$; $z_{M,1}$, $z_{M,2}$, $z_M$; $z_B$) als auch die seitliche Abweichung ($y_P$; $x_M$; $x_B$, $y_B$) von der Vertikalen zu bestimmen.

3. Verfahren gemäß Anspruch 1 oder 2, bei dem der Wert für die mittlere Ausbreitungsgeschwindigkeit ($c_{moy}(z_P)$, $c_{moy}(z_M)$) von einem Profil der mittleren Ausbreitungsgeschwindigkeit ($c_{moy(Z)}$) ausgehend bestimmt wird, wobei das Profil der mittleren Ausbreitungsgeschwindigkeit ($c_{moy(Z)}$) durch digitale Integration eines Profils zuvor ermittelter örtlicher Ausbreitungsgeschwindigkeit zwischen der Tiefe des Senders (4) und der Tiefe der Empfangsantenne (13, 14) oder zwischen der Tiefe des eingetauchten Elements (P; M) und der Tiefe der Empfangsantenne (14; 14, 13) bestimmt wird.

4. Verfahren gemäß Anspruch 1 oder 2, mit einer Verlagerung der Empfangsantenne parallel zu ihrer Längsachse von einer ersten Position (O1) zu einer zweiten Position (O2) und mit der Bestimmung einer ersten Ausbreitungszeit einer ersten Schallwelle für die erste Position (O1) und einer ersten Ausbreitungskonstanten ($\alpha$; $\alpha_{M,1}$, $\alpha_{M,2}$) der empfangenen Schallwelle und in entsprechender Weise einer zweiten Ausbreitungszeit einer zweiten Schallwelle für die zweite Position (02) und einer zweiten Ausbreitungskonstanten ($\alpha_{M,2}$), und bei dem der Wert für die mittlere Ausbreitungsgeschwindigkeit ($c_{moy}(z_P)$, $c_{moy}(z_M)$) in Abhängigkeit von der ersten Ausbreitungszeit, der zweiten Ausbreitungszeit und der zweiten Ausbreitungskonstanten ($\alpha_{M,2}$) bestimmt wird.

5. Verfahren gemäß Anspruch 4 mit der Bestimmung eines Profils der mittleren Ausbreitungsgeschwindigkeit ($c_{moy(z)}$) für eine Anzahl Tiefen (z) zwischen der Tiefe des Senders (4) und der Tiefe der Empfangsantenne (13, 14) oder zwischen der Tiefe des eingetauchten Elements (P; M) und der Tiefe der Empfangsantenne (14; 14, 13) und, vom Profil der mittleren Ausbreitungsgeschwindigkeit ($c_{moy(z)}$) ausgehend, einer Abschätzung eines Profils der örtlichen Ausbreitungsgeschwindigkeit durch ein digitales Umkehrverfahren.

6. Verfahren gemäß einem der Ansprüche 1 bis 5, bei dem die Tiefendifferenz (zp, $\Delta z$; $z_{M,1}$, $z_{M,2}$, $z_M$; $z_B$) so bestimmt wird, daß sie eine relative Abweichung von weniger als einem Promille in Bezug

- auf das Produkt aus der Ausbreitungszeit (t; $t_{M,1}$, $t_{M,2}$; $t_B$) und dem Wert der mittleren Ausbreitungsgeschwindigkeit ($c_{moy}(z_P)$, $c_{moy}(z_M)$),
- multipliziert mit dem Kosinus des mittleren Ausbreitungswinkels ($\theta_{moy}$), aufweist.

7. Verfahren gemäß einem der Ansprüche 1 bis 6, bei dem die seitliche Abweichung so bestimmt wird, daß sie eine relative Abweichung von weniger als einem Promille in Bezug

- auf das Produkt aus der Ausbreitungszeit (t; $t_{M,1}$, $t_{M,2}$; $t_B$) und dem Wert der mittleren Ausbreitungsgeschwindigkeit ($c_{moy}(z_P)$, $c_{moy}(z_M)$),
- multipliziert mit dem Sinus des mittleren Ausbreitungswinkels ($\theta_{moy}$), aufweist.

8. Verfahren gemäß einem der Ansprüche 1 bis 7, bei dem der mittlere Ausbreitungswinkel ($\theta_{moy}$) so bestimmt wird, daß dessen Sinus eine relative Abweichung von weniger als einem Promille in Bezug auf das Produkt aus der Ausbreitungskonstanten ($\alpha$; $\alpha_{M,1}$, $\alpha_{M,2}$) und dem Wert der mittleren Ausbreitungsgeschwindigkeit ($c_{moy(ZP)}$, $c_{moy(ZM)}$) aufweist.

9. Verfahren gemäß einem der Ansprüche 1 bis 8, bei dem der mittlere Ausbreitungswinkel ($\theta_{moy}$) außerdem in Abhängigkeit von einer mittleren arithmetischen Ausbreitungsgeschwindigkeit ($c^-$) bestimmt wird, die für einen arithmetischen Mittelwert einer Anzahl lokaler Ausbreitungsgeschwindigkeiten (c) steht, die die Schallwellen in einer jeweiligen Anzahl Tiefen (z) von der Tiefe des Senders (4) bis zur Tiefe der Empfangsantenne (13, 14) oder von der Tiefe des eingetauchten Elements (P; M) bis zur Tiefe der Empfangsantenne (14; 14, 13) aufweisen.

10. Verfahren gemäß Anspruch 9, bei dem der mittlere Ausbreitungswinkel ($\theta_{moy}$) so bestimmt wird, daß dessen Sinus eine relative Abweichung von weniger als einem Promille in Bezug auf das Produkt aus der Ausbreitungskonstanten ($\alpha$; $\alpha_{M,1}$, $\alpha_{M,2}$) und dem Wert der mittleren arithmetischen Ausbreitungsgeschwindigkeit ($c^-$) aufweist.

11. Verfahren gemäß einem der Ansprüche 1 bis 10, bei dem mit dem Sender (15; 15, 16) und der Empfangsantenne (14; 14, 13) ein und dasselbe Sonarsystem (10) ausgestattet ist und im Verlauf dessen das Sonarsystem (10) die Tiefendifferenz (zp, $\Delta z$; $z_{M,1}$, $z_{M,2}$, $z_M$) oder die seitliche Abweichung ($y_P$; $x_M$) gegenüber der Vertikalen zwischen der Empfangsantenne und einem eingetauchten Element (P; M), das die Schallwelle bei deren Ausbreitung vom Sender (15; 15, 16) bis zur Empfangsantenne (14; 14, 13) reflektiert, bestimmt,

12. Verfahren gemäß einem der Ansprüche 1 bis 1 0, bei dem der Sender (4) und die Empfangsantenne (13, 14) in zwei verschiedenen Systemen (3, 10) installiert sind, die sich in jeweiligen verschiedenen Tiefen ($z_B$, $z_o$) befinden, und im Verlauf dessen das mit der Empfangsantenne (13, 14) ausgestattete System (10) die Tiefendifferenz ($z_B$) oder die seitliche Abweichung ($x_B$, $y_B$) gegenüber der Vertikalen zwischen der Empfangsantenne (13, 14) und dem Sender (4) bestimmt.

13. Verfahren gemäß Anspruch 3, das außerdem die folgenden Schritte aufweist:

- mittels einer Sonde, die nacheinander in verschiedenen Tiefen (z) positioniert wird, eine Anzahl örtlicher Ausbreitungsgeschwindigkeiten (c) bestimmen, die die Schallwellen jeweils bei jeder der Tiefen (z) aufweisen, dann
- das mittlere Ausbreitungsgeschwindigkeitsprofil in Abhängigkeit von der zuvor bestimmten Anzahl örtlicher Ausbreitungsgeschwindigkeiten (c) bestimmen.

14. Verfahren gemäß Anspruch 4, bei dem der Wert der mittleren Ausbreitungsgeschwindigkeit ($c_{moy}(z_i)$) so bestimmt wird, daß eine Abweichung zwischen

- der Tiefendifferenz ($z_{M,1}$) und
- einer zweiten Tiefendifferenz ($z_{M,2}$) zwischen der Empfangsantenne (14) und dem eingetauchten Element (M)

kleiner als eine gegebene Schwelle ist, wobei die zweite Tiefendifferenz ($z_{M,2}$) in Abhängigkeit

- von einem Produkt aus der zweiten Ausbreitungszeit ($t_{M,2}$) und dem Wert für die mittlere Ausbreitungsgeschwindigkeit ($c_{moy}$) und in Abhängigkeit
- von einem zweiten mittleren Ausbreitungswinkel, der zwischen der Vertikalen und einer effektiven Ausbreitungsrichtung der zweiten Schallwelle definiert ist, wobei der zweite mittlere Ausbreitungswinkel in Abhängigkeit von der zweiten Ausbreitungskonstanten ($\alpha_{M,2}$) bestimmt wird,

bestimmt wird.

15. Verfahren zur Bestimmung einer örtlichen Ausbreitungsgeschwindigkeit (c) der Schallwellen in einem Unterwasserumfeld (E) mit den folgenden Schritten:

- für eine Anzahl eingetauchter, in verschiedenen Tiefen ($z_M$, $z_M'$, $z_M''$) angeordneter Elemente (M, M', M'') Bestimmung einer jeweiligen Anzahl von Werten mittlerer Ausbreitungsgeschwindigkeit ($c_{moy(z_M)}$, $c_{moy(z_{M'})}$, $c_{moy(z_{M''})}$), wobei jeder dieser Werte gemäß dem durch den Anspruch 14 definierten Verfahren bestimmt wird, dann
- Bestimmung einer Anzahl örtlicher Ausbreitungsgeschwindigkeiten (c) der Schallwellen für eine Anzahl gegebener Tiefen im Intervall der Tiefen der Anzahl eingetauchter Elemente, und insbesondere für jede Tiefe ($z_M$, $z_{M'}$, $z_M''$) jedes eingetauchten Elements der Anzahl eingetauchter Elemente, in Abhängigkeit von der zuvor bestimmten Anzahl von Werten mittlerer Ausbreitungsgeschwindigkeit ($c_{moy(z_M)}$, $c_{moy(z_{M'})}$, $c_{moy(z_M'')}$), und
- von der Anzahl zuvor bestimmter örtlicher Ausbreitungsgeschwindigkeiten und den zugeordneten Ausbreitungskonstanten ausgehend, Bestimmung der jeweiligen Einfallswinkel der Schallwelle an jedem der eingetauchten Elemente.

16. Verfahren zur Bestimmung einer Position ($x_B$, $y_B$) eines in ein Unterwasserumfeld (E) eingetauchten Senders (4) mit den folgenden Schritten:

- Aussendung einer Schallwelle in das Unterwasserumfeld durch den Sender (4), dessen Tiefe ($z_B$) bekannt ist,
- Empfang der Schallwelle mittels einer Empfangsantenne (13, 14), mit der ein Überwasser- oder Unterwasserschiff (1) ausgestattet ist, wobei die Empfangsantenne (13, 14) mehrere Empfänger (15, 16) aufweist, die eine jeweilige Anzahl Empfangssignale ($\underline{s}$) liefern,
- Bestimmung einer Ausbreitungskonstanten ($\alpha$) der empfangenen Schallwelle in Abhängigkeit von den Empfangssignalen ($\underline{s}$), wobei die Ausbreitungskonstante gleich dem Sinus eines Empfangswinkels ($\theta_0$), der die Empfangsrichtung der Schallwelle in Bezug auf die Vertikale in einer den Sender (4) und die Empfangsantenne (13, 14) enthaltenden vertikalen Ebene (PI) angibt, dividiert durch eine örtliche Ausbreitungsgeschwindigkeit ($c_0$) der Schallwellen in der Tiefe ($z_0$) der Empfangsantenne, ist,
- Bestimmung einer effektiven Ausbreitungsrichtung der Schallwelle in Abhängigkeit vom Produkt aus der Ausbreitungskonstanten ($\alpha$) und einem Wert der mittleren Ausbreitungsgeschwindigkeit ($c_{moy(z_B)}$) in der Tiefe ($z_B$) des eingetauchten Senders (4), wobei der Wert der mittleren Ausbreitungssehnelligkeit ($c_{moy(z_B)}$) für ein harmonisches Mittel einer Anzahl örtlicher Ausbreitungsgeschwindigkeiten (c) steht, die die Schallwellen in einer jeweiligen Anzahl Tiefen (z) zwischen der Tiefe ($z_B$) des Senders und der Tiefe ($z_0$) der Empfangsantenne aufweisen, und
- Bestimmung einer seitlichen Abweichung ($x_B$, $y_B$) in Bezug auf die Vertikale zwischen der Empfangsantenne (13, 14) und dem Sender (4) in Abhängigkeit vom Produkt aus

- der Differenz zwischen der Tiefe ($z_B$) des Senders und der Tiefe ($z_0$) der Empfangsantenne und
- dem Tangens eines mittleren Ausbreitungswinkels ($\theta_{moy}$), der zwischen der effektiven Ausbreitungsrichtung und der Vertikalen bestimmt ist, wobei der mittlere Ausbreitungswinkel ($\theta_{moy}$) in Abhängigkeit von der Ausbreitungskonstanten ($\alpha$) und dem Wert der mittleren Ausbreitungsgeschwindigkeit ($c_{moy(z_B)}$) der Schallwelle in der Tiefe ($z_B$) des Senders (4) bestimmt wird.

17. Sonarsystem (10) mit

- einer Empfangsantenne (13, 14), die dazu ausgelegt ist, eine Schallwelle zu empfangen, die zuvor in einem Unterwasserumfeld von mindestens einem Sender (15, 16,4) ausgesendet worden ist, wobei die Empfangsantenne (13, 14) mehrere Empfänger (15, 16) aufweist, die geeignet sind, beim Empfang der Schallwelle eine jeweilige Anzahl Empfangssignale ($\underline{s}$) abzugeben, und

wobei das Sonarsystem (10) **dadurch gekennzeichnet ist, daß** es eine elektronische Verarbeitungseinheit (18) aufweist, die programmiert ist,

- eine Ausbreitungskonstante ($\alpha$; $\alpha_{M,1}$, $\alpha_{M,2}$) der empfangenen Schallwelle in Abhängigkeit von den Empfangssignalen ($\underline{s}$) zu bestimmen, wobei die Ausbreitungskonstante gleich dem Sinus eines Empfangswinkels ($\theta_0$),

der die Empfangsrichtung der Schallwelle gegenüber der Vertikalen angibt, dividiert durch eine örtliche Ausbreitungsgeschwindigkeit ($c_0$) der Schallwellen in der Tiefe der Empfangsantenne zu bestimmen,

- eine Ausbreitungszeit (t; $t_{M,1}$, $t_{M,2}$; $t_B$) der Schallwelle in Abhängigkeit von einer den Aussendezeitpunkt vom Empfangszeitraum trennenden Dauer zu bestimmen und

- eine Tiefendifferenz ($z_P$, $\Delta z$; $z_{M,1}$, $z_{M,2}$, $z_M$; $z_B$) oder eine seitliche Abweichung ($y_P$; $x_M$; $x_B$, $y_B$) gegenüber der Vertikalen zwischen der Empfangsantenne (1 3, 14) und dem Sender (4) oder zwischen der Empfangsantenne (14; 14, 13) und einem eingetauchten Element (P; M), das die Schallwelle bei deren Ausbreitung vom Sender (15; 15, 16) zur Empfangsantenne (14; 14, 13) reflektiert, in Abhängigkeit

- von einem Produkt aus der Ausbreitungszeit (t; $t_{M,1}$, $t_{M,2}$; $t_B$) und einem Wert der mittleren Ausbreitungsgeschwindigkeit ($c_{moy(z_P)}$, $c_{moy(z_M)}$) der Schallwelle, wobei der Wert der mittleren Ausbreitungsgeschwindigkeit ($c_{moy(z_P)}$, $c_{moy(z_M)}$) für ein harmonisches Mittel einer Anzahl lokaler Ausbreitungsgeschwindigkeiten (c) steht, die die Schallwellen bei einer jeweiligen Anzahl Tiefen (z), die von der Tiefe des Senders (4) bis zu einer Tiefe der Empfangsantenne (13, 14) oder von der Tiefe des eingetauchten Elements (P; M) bis zu einer Tiefe der Empfangsantenne (14; 14, 13) reichen, aufweisen, und in Abhängigkeit

- von einem mittleren Ausbreitungswinkel ($\theta_{moy}$), der zwischen der Vertikalen und einer effektiven Ausbreitungsrichtung der Schallwelle definiert ist, wobei der mittlere Ausbreitungswinkel ($\theta_{moy}$) in Abhängigkeit von der Ausbreitungskonstanten ($\alpha$; $\alpha_{M,1}$, $\alpha_{M,2}$) und dem Wert der mittleren Ausbreitungsgeschwindigkeit ($c_{moy(z_P)}$, $c_{moy(z_M)}$) der Schallwelle in der Tiefe ($z_P$, $z_M$) des Senders (4) oder in der Tiefe ($z_B$, $z'_B$) des eingetauchten Elements (P ; M) bestimmt wird,

zu bestimmen.

**18.** Sonarsystem (10) mit

- einer Empfangsantenne (13, 14), die dazu ausgelegt ist, eine Schallwelle zu empfangen, die zuvor in einem Unterwasserumfeld von einem Sender (4) ausgesendet worden ist, dessen Tiefe ($z_B$) bekannt ist, wobei die Empfangsantenne (13, 14) mehrere Empfänger (15, 16) aufweist, die geeignet sind, beim Empfang der Schallwelle eine jeweilige Anzahl Empfangssignale ($\underline{s}$) abzugeben, und

wobei das Sonarsystem (10) **dadurch gekennzeichnet ist, daß** es eine elektronische Verarbeitungseinheit (18) aufweist, die programmiert ist,

- eine Ausbreitungskonstante ($\alpha$) der empfangenen Schallwelle in Abhängigkeit von den Empfangssignalen ($\underline{s}$) zu bestimmen, wobei die Ausbreitungskonstante gleich dem Sinus eines Empfangswinkels ($\theta_0$), der die Empfangsrichtung der Schallwelle gegenüber der Vertikalen in einer vertikalen Ebene (PI), die den Sender (4) und die Empfangsantenne (13, 14) aufweist, angibt, dividiert durch eine örtliche Ausbreitungsgeschwindigkeit ($c_0$) der Schallwellen in der Tiefe ($z_0$) der Empfangsantenne, zu bestimmen,

- eine effektive Ausbreitungsrichtung der empfangenen Schallwelle in Abhängigkeit vom Produkt aus der Ausbreitungskonstanten ($\alpha$) und einem Wert der mittleren Ausbreitungsgeschwindigkeit ($c_{moy(z_B)}$) in der Tiefe ($z_B$) des Senders zu bestimmen, wobei der Wert der mittleren Ausbreitungsgeschwindigkeit ($c_{moy(z_B)}$) für ein harmonisches Mittel einer Anzahl lokaler Ausbreitungsgeschwindigkeiten (c) steht, die die Schallwellen bei einer jeweiligen Anzahl Tiefen (z), die von der Tiefe des Senders (4) bis zu einer Tiefe der Empfangsantenne (13, 14) reichen, aufweisen,

- eine für die Tiefe ($z_B$) des Senders (4) repräsentative Größe zu erhalten oder aus einem Speicher auszulesen und

- eine seitliche Abweichung ($x_B$, $y_B$) gegenüber der Vertikalen zwischen der Empfangsantenne (13, 14) und dem Sender (4) in Abhängigkeit vom Produkt aus

- der Differenz zwischen der Tiefe ($z_B$) des Senders und der Tiefe ($z_0$) der Empfangsantenne und

- dem Tangens eines mittleren Ausbreitungswinkels ($\theta_{moy}$), der zwischen der effektiven Ausbreitungsrichtung und der Vertikalen bestimmt ist, wobei der mittlere Ausbreitungswinkel ($\theta_{moy}$) in Abhängigkeit von der Ausbreitungskonstanten ($\alpha$) und dem Wert der mittleren Ausbreitungsgeschwindigkeit ($c_{moy(z_B)}$) der Schallwelle in der Tiefe ($z_B$) des Senders (4) bestimmt wird,

zu bestimmen.

**Claims**

1. A method for determining depth difference ($z_P$, $\Delta z$; $z_{M,1}$, $z_{M,2}$, $z_M$; $z_B$), or a lateral deviation ($y_P$; $x_M$; $x_B$, $y_B$) with respect to the vertical, between two points of an underwater environment (E), the method comprising the following steps:

   - emitting a sound wave in the underwater environment (E) using at least one transmitter (15; 15, 16; 4),
   - receiving said sound wave using a receiving antenna (14; 14, 13) comprising several receivers (16; 16, 15), said receivers outputting a respective plurality of reception signals ($\underline{s}$) upon reception of said sound wave,
   - determining a propagation constant ($\alpha$; $\alpha_{M,1}$, $\alpha_{M,2}$) of the received sound wave, as a function of said reception signals (s), said propagation constant being equal to the sine of a reception angle ($\theta_o$) indicating the direction of reception of the sound wave with respect to the vertical, divided by a local propagation velocity ($c_o$) of the sound waves at the depth of said receiving antenna,
   - determining a propagation time (t; $t_{M,1}$, $t_{M,2}$; $t_B$) of the sound wave, as a function of the duration separating the times of emission and reception of the sound wave, and
   - determining the depth difference ($z_P$, $\Delta z$; $z_{M,1}$, $z_{M,2}$, $z_M$; $z_B$), or the lateral deviation ($y_P$; $x_M$; $x_B$, $y_B$) with respect to the vertical, between the receiving antenna (13, 14) and the transmitter (4), or between the receiving antenna (14; 14, 13) and a submerged element (P; M) reflecting said sound wave during its propagation from the transmitter (15; 15, 16) to the receiving antenna (14; 14, 13), as a function of:

      - a product of said propagation time (t; $t_{M,1}$, $t_{M,2}$; $t_B$) by a mean velocity value ($c_{moy(z_P)}$, $c_{moy(z_M)}$) of the sound wave at a depth ($z_P$, $z_M$) of the transmitter (4) or at a depth ($z_B$, $z'_B$) of the submerged element (P; M), said mean velocity value ($c_{moy(z_P)}$, $c_{moy(z_M)}$) being representative of a harmonic mean of a plurality of local propagation velocities (c), exhibited by the sound waves at a respective plurality of depths (z) from the depth of the transmitter (4) to a depth of the receiving antenna (13, 14), or from the depth of said submerged element (P; M) to the depth of the receiving antenna (14; 14, 13),

      and as a function of

      - a mean propagation angle ($\theta_{moy}$), defined between the vertical and an effective direction of propagation of the sound wave, the mean propagation angle ($\theta_{moy}$) being determined as a function of said propagation constant ($\alpha$; $\alpha_{M,1}$, $\alpha_{M,2}$) and of said mean velocity value ($c_{moy(z_P)}$, $c_{moy(z_M)}$) of the sound wave at the depth ($z_P$, $z_M$) of the transmitter (4) or at the depth ($z_B$, $z'_B$) of the submerged element (P; M).

2. The method according to claim 1, wherein it is provided to determine both said depth difference (zp, $\Delta z$; $z_{M,1}$, $z_{M,2}$, $z_M$; $z_B$) and said lateral deviation (yp; $x_M$; $x_B$, $y_B$) with respect to the vertical.

3. The method according to claim 1 or 2, wherein said mean velocity value ($c_{moy(z_P)}$, $c_{moy(z_M)}$) is determined from a mean velocity profile ($c_{moy(z)}$), the mean velocity profile ($c_{moy(z)}$) being determined by numerical integration of a local propagation velocity profile previously surveyed between the depth of the transmitter (4) and the depth of the receiving antenna (13, 14), or between the depth of said submerged element (P; M) and the depth of the receiving antenna (14; 14, 13).

4. The method according to claim 1 or 2, comprising a displacement of the receiving antenna in parallel to its longitudinal axis from a first position (O1) to a second position (O2), and comprising the determination of a first propagation time of a first sound wave for the first position (O1) and a first propagation constant ($\alpha$; $\alpha_{M,1}$, $\alpha_{M,2}$) of the received sound wave, and, respectively, a second propagation time of a second sound wave for the second position (O2) and a second propagation constant ($\alpha_{M,2}$), and wherein said mean velocity value ($c_{moy(z_P)}$, $c_{moy(z_M)}$) is determined as a function of the first propagation time, the second propagation time and the second propagation constant ($\alpha_{M,2}$).

5. The method according to claim 4, comprising the determination of a mean velocity profile ($c_{moy}(z)$) for a plurality of depths (z) comprised between the depth of the transmitter (4) and the depth of the receiving antenna (13, 14), or between the depth of said submerged element (P; M) and the depth of the receiving antenna (14; 14, 13), and the estimation of a local propagation velocity profile by a numerical method of inversion from the mean velocity profile ($c_{moy(z)}$).

6. The method according to any one of claims 1 to 5, wherein said depth difference ($z_P$, $\Delta z$; $z_{M,1}$, $z_{M,2}$, $z_M$; $z_B$) is determined in such a way as to exhibit a relative deviation lower than one per thousand with respect to:

- the product of said propagation time (t; $t_{M,1}$, $t_{M,2}$; $t_B$) by said mean velocity value ($c_{moy(z_P)}$, $c_{moy(z_M)}$),
- multiplied by the cosine of said mean propagation angle ($\theta_{moy}$).

7. The method according to any one of claims 1 to 6, wherein said lateral deviation is determined in such a way as to exhibit a relative deviation lower than one per thousand with respect to:

- the product of said propagation time (t; $t_{M,1}$, $t_{M,2}$; $t_B$) by said mean velocity value ($c_{moy(z_P)}$, $c_{moy(z_M)}$),
- multiplied by the sine of said mean propagation angle ($\theta_{moy}$).

8. The method according to any one of claims 1 to 7, wherein the mean propagation angle ($\theta_{moy}$) is determined in such a way as its sine exhibits a relative deviation lower than one per thousand with respect to the product of said propagation constant ($\alpha$; $\alpha_{M,1}$, $\alpha_{M,2}$) by said mean velocity value ($c_{moy(z_P)}$, $c_{moy(z_M)}$).

9. The method according to any one of claims 1 to 8, wherein the mean propagation angle ($\theta_{moy}$) is further determined as a function of an arithmetic mean velocity ($\bar{c}$) that is representative of an arithmetic mean of a plurality of local propagation velocities (c), exhibited by the sound waves at a respective plurality of depths (z) from the depth of the transmitter (4) to the depth of the receiving antenna (13, 14), or from the depth of said submerged element (P; M) to the depth of the receiving antenna (14; 14, 13).

10. The method according to claim 9, wherein the mean propagation angle ($\theta_{moy}$) is determined in such a way as its sine exhibits a relative deviation lower than one per thousand with respect to said propagation constant ($\alpha$) multiplied by said arithmetic mean velocity ($\bar{c}$).

11. The method according to any one of claims 1 to 10, wherein the transmitter (15; 15, 16) and the receiving antenna (14; 14, 13) are fitted on a same sonar system (10), and during which this sonar system (10) determines the depth difference ($z_P$, $\Delta z$; $z_{M,1}$, $z_{M,2}$, $z_M$) or the lateral deviation ($y_P$; $x_M$) with respect to the vertical between the receiving antenna and a submerged element (P; M) reflecting said sound wave during its propagation from the transmitter (15; 15, 16) to the receiving antenna (14; 14, 13).

12. The method according to any one of claims 1 to 10, wherein the transmitter (4) and the receiving antenna (14, 13) are respectively fitted on two distinct systems (3, 10) situated at different respective depths ($z_B$, $z_o$), and, during which the system (10) provided with the receiving antenna (13, 14) determines the depth difference ($z_B$) or the lateral deviation ($x_B$, $y_B$) with respect to the vertical between the receiving antenna (13, 14) and said transmitter (4).

13. The method according to claim 3, further comprising the following steps:

- determining, by means of a sounder positioned successively at several different depths (z), a plurality of local propagation velocities (c) exhibited, at each of said depths (z), respectively, by the sound waves, then
- determining the local propagation velocity profile as a function of said previously-determined plurality of local propagation velocities (c).

14. The method according to claim 4, wherein said mean velocity value ($c_{moy}(z)$) is determined in such a way as a deviation between:

- said depth difference ($z_{M,1}$), and
- a second depth difference ($z_{M,2}$) between the receiving antenna (14) and the submerged element (M)

is lower than a given threshold, said second depth difference ($z_{M,2}$) being determined as a function of:

- a product of said second propagation time ($t_{M,2}$) by said mean velocity value($c_{moy}$), and as a function of
- a second mean propagation angle, defined between the vertical and an effective direction of propagation of said second sound wave, said second mean propagation angle being determined as a function of said second propagation constant ($\alpha_{M,2}$).

15. A method for determining a local propagation velocity (c) of the sound waves in an underwater environment (E), comprising the following steps:

- for a plurality submerged elements (M, M', M") situated a different depths ($z_M$, $z_M'$, $z_M"$), determining a plurality of respective mean velocity values ($c_{moy}(z_M)$, $c_{moy}(z_{M'})$, $c_{moy}(z_M'')$), each of said values being determined in accordance with the method defined in claim 14, then

- determining a plurality of local propagation velocities (c) of the sound waves, for a plurality of given depths in the depth interval of the plurality of submerged elements, and in particular for each depth ($z_M$, $z_M'$, $z_M''$) of each submerged element of said plurality of submerged elements, as a function of said previously-determined plurality of mean velocity values ($c_{moy}(z_M)$, $c_{moy}(z_{M'})$, $C_{moy}(z_{M''})$), and
- determining at each of said submerged elements, from the previously-determined plurality of local propagation velocities and the associated propagation constants, the respective incidence angles of the sound wave.

16. A method for determining a position ($x_B$, $y_B$) of a submerged transmitter (4) in an underwater environment (E), comprising the following steps:

- emitting a sound wave in the underwater environment using said transmitter (4), whose depth ($z_B$) is known,
- receiving said sound wave using at least one receiving antenna (13, 14) fitted on a surface or submersible vessel (1), the receiving antenna (13, 14) comprising several receivers (15, 16) outputting a respective plurality of reception signals ($\underline{s}$),
- determining a propagation constant ($\alpha$) of the received sound wave, as a function of said reception signals (s), said propagation constant being equal to the sine of a reception angle ($\theta_o$) indicating the direction of reception of the sound wave with respect to the vertical in a vertical plane (PI) containing the transmitter (4) and the receiving antenna (13, 14), divided by a local propagation velocity ($c_o$) of the sound waves at the depth ($z_o$) of said receiving antenna,
- determining an effective direction of propagation of the sound wave as a function of the product of said propagation constant ($\alpha$) and a mean propagation velocity value ($c_{moy}(z_B)$) at the depth ($z_B$) of the submerged transmitter (4), said mean velocity value ($c_{moy}(z_B)$) being representative of a harmonic mean of a plurality of local propagation velocities (c), exhibited by the sound waves at a respective plurality of depths (z) between the depth ($z_B$) of the transmitter and the depth ($z_o$) of the receiving antenna, and
- determining a lateral deviation ($x_B$, $y_B$) with respect to the vertical between the receiving antenna (13, 14) and the transmitter (4), as a function of the product of:

- the difference between the depth ($z_B$) of the transmitter and the depth ($z_0$) of the receiving antenna, and of
- the tangent of a mean propagation angle ($\theta_{moy}$) defined between said effective direction of propagation and the vertical, the mean propagation angle ($\theta_{moy}$) being determined as a function of said propagation constant ($\alpha$) and said mean velocity value ($c_{moy}(z_B)$) of the sound wave at the depth ($z_B$) of the transmitter (4).

17. A sonar system (10) comprising:

- a receiving antenna (13,14) configured to receive a sound wave that has been previously emitted in an underwater environment by at least one transmitter (15, 16, 4), the receiving antenna (13, 14) comprising several receivers (15, 16) adapted to output a respective plurality of reception signals ($\underline{s}$) upon reception of said sound wave, and
- an electronic processing unit (18) programmed to:

- determine a propagation constant ($\alpha$; $\alpha_{M,1}$, $\alpha_{M,2}$) of the received sound wave, as a function of said reception signals ($\underline{s}$), said propagation constant being equal to the sine of a reception angle ($\theta_o$) indicating the direction of reception of the sound wave with respect to the vertical, divided by a local propagation velocity ($c_o$) of the sound waves at the depth of said receiving antenna,
- determine a propagation time (t; $t_{M,1}$, $t_{M,2}$; $t_B$) of the sound wave, as a function of a duration separating the times of emission and reception of the sound wave, and to

- determine a depth difference ($z_P$, $\Delta z$; $z_{M,1}$, $z_{M,2}$, $z_M$; $z_B$), or a lateral deviation ($y_P$; $x_M$; $x_B$, $y_B$) with respect to the vertical, between the receiving antenna (13, 14) and the transmitter (4), or between the receiving antenna (14; 14, 13) and a submerged element (P; M) reflecting said sound wave during its propagation from the transmitter (15; 15, 16) to the receiving antenna (14; 14, 13), as a function of:

- a product of said propagation time (t; $t_{M,1}$, $t_{M,2}$; $t_B$) by a mean velocity value ($c_{moy}(z_P)$, $c_{moy}(z_M)$) of the sound wave, said mean velocity value ($c_{moy}(z_P)$, $c_{moy}(z_M)$) being representative of a harmonic mean of a plurality of local propagation velocities (c), exhibited by the sound waves at a respective plurality of depths (z) from the depth of the transmitter (4) to a depth of the receiving antenna (13, 14), or from the depth of said submerged element (P; M) to the depth of the receiving antenna (14; 14, 13), and as a function of
- a mean propagation angle ($\theta_{moy}$) defined between the vertical and an effective direction of propagation of the sound wave, the mean propagation angle ($\theta_{moy}$) being determined as a function of said propagation constant ($\alpha$; $\alpha_{M,1}$, $\alpha_{M,2}$) and said mean velocity value ($c_{moy(z_P)}$, $c_{moy(z_M)}$) of the sound wave at the depth ($z_P$, $z_M$) of the transmitter (4) or at the depth ($z_B$, $z'_B$) of the submerged element (P; M).

18. A sonar system (10) comprising:

    - a receiving antenna (13,14) configured to receive a sound wave that has been previously emitted in an underwater environment by a transmitter (4) whose depth ($z_B$) is known, the receiving antenna (13, 14) comprising several receivers (15, 16) adapted to output a respective plurality of reception signals ($\underline{s}$) upon reception of said sound wave, and
    - an electronic processing unit (18) programmed to:

        - determine a propagation constant ($\alpha$) of the received sound wave, as a function of said reception signals (s), said propagation constant being equal to the sine of a reception angle ($\theta_0$) indicating the direction of reception of the sound wave with respect to the vertical in a vertical plane (PI) containing the transmitter (4) and the receiving antenna (13, 14), divided by a local propagation velocity ($c_0$) of the sound waves at the depth ($z_0$) of said receiving antenna,
        - determine an effective direction of propagation of the received sound wave, as a function the product of said propagation constant ($\alpha$) and a mean propagation velocity value ($c_{moy}(z_B)$) at the depth ($z_B$) of the transmitter, said mean velocity value ($c_{moy}(z_B)$) being representative of a harmonic mean of a plurality of local propagation velocities (c), exhibited by the sound waves at a respective plurality of depths (z) from the depth of the transmitter (4) to a depth of the receiving antenna (13, 14),

    - acquire or read in a memory a data representative of the depth ($z_B$) transmitter (4), and to
    - determine a lateral deviation ($x_B$, $y_B$) with respect to the vertical, between the receiving antenna (13, 14) and the transmitter (4), as a function of the product of:

        - the difference between the depth ($z_B$) of the transmitter and the depth ($z_0$) of the receiving antenna, and of
        - the tangent of a mean propagation angle ($\theta_{moy}$) defined between said effective direction of propagation and the vertical, the mean propagation angle ($\theta_{moy}$) being determined as a function of said propagation constant ($\alpha$) and said mean velocity value ($c_{moy}(z_B)$) of the sound wave at the depth ($z_B$) of the transmitter (4).

**Fig.1**

**Fig.2**

**Fig.3**

**Fig.4**

**Fig.5**

**Fig.6**

## Fig.7A

## Fig.7B

## Fig.8

## Fig.9

# Fig.10

# Fig.11

# Fig.12

Fig.13

Fig.14

Fig.15

## RÉFÉRENCES CITÉES DANS LA DESCRIPTION

**Documents brevets cités dans la description**

- WO 0142812 A1

- US 6577557 B1

**Littérature non-brevet citée dans la description**

- **E.A. ROBINSON ; T.S. DURRANI ; L.G. PEARDON.** Geophysical Signal Processing. Prentice Hall, 1986

- **M.J. DAINTITH.** Approximate Methods For Ray Tracing. *SaclantCen Conference proceedings,* Septembre 1971, (5